(19) **Europäisches Patentamt / European Patent Office / Office européen des brevets**

(11) **EP 2 375 221 B1**

(12) **EUROPEAN PATENT SPECIFICATION**

(45) Date of publication and mention of the grant of the patent:
**29.03.2017 Bulletin 2017/13**

(51) Int Cl.:
***G01D 5/244*** *(2006.01)*

(21) Application number: **11161083.8**

(22) Date of filing: **05.04.2011**

(54) **Encoder and condition monitoring thereof**

Codierer mit Zustandsüberwachung

Codeur et procédé de surveillance de l'état dudit codeur

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.04.2010 SE 1050351**

(43) Date of publication of application:
**12.10.2011 Bulletin 2011/41**

(73) Proprietor: **LEINE & LINDE AB**
**645 21 Strängnäs (SE)**

(72) Inventor: **Gustafsson, Fredrik**
**645 42, STRÄNGNÄS (SE)**

(74) Representative: **Zacco Sweden AB**
**P.O. Box 5581**
**114 85 Stockholm (SE)**

(56) References cited:
**US-A- 5 511 422**    **US-A1- 2007 118 333**
**US-A1- 2010 012 874**    **US-B2- 6 615 156**

# EP 2 375 221 B1

## Description

### Technical field

The present invention relates to a method and an encoder and in particular to a method and an encoder for determining at least one parameter related to a type of vibration for the encoder.

### Background

A rotary encoder is an important sensor commonly used in closed loop velocity control and positioning applications within industrial applications, for example in plants for paper or steel making in which the rotary encoder may be arranged to detect rotary movement of a machine shaft. In general, rotary encoders comprise a detector part which detects rotary motion and generates a signal corresponding to the detected angular position change. Different values, such as angular velocity and number of revolutions may be derived from the signal. The rotary encoders further comprise means, such as a bearing for attaching the rotary encoder to a shaft of a machine whose movement is to be detected as well as means for attaching a casing of the rotary encoder to a casing of the machine.

There are several different types of rotary encoders, for example optoelectrical encoders as described in EP 1480344. This type of encoder includes an encoding disc that has an optically readable pattern. There are also other types of rotary encoders based on other measurement principles. These encoders include for example magnetic encoders, inductive encoders, capacitive encoder.

One problem related to rotary encoders is that the rotary encoders are used in environments which cause different types of wear to the rotary encoder. Due to the wear that the rotary encoder is subjected to the overall condition of the rotary encoder degrades which in turn may lead to malfunctioning of the rotary encoder.

Another factor which may influence negatively on the overall condition of the rotary encoder is the quality of the installation of the rotary encoder, for instance the alignment of the rotary encoder when the rotary encoder is installed in the machine.

A faulty rotary encoder could lead to unscheduled stops of machines or plants for service or replacement of parts. This is disadvantageous since it leads to costly drops in production.

It is known in the art to monitor the condition of rotary encoders. The optical rotary encoder described in EP1480344 comprises a circuit that provides a warning signal when the optical disc of the rotary encoder is contaminated. A user is then informed that the encoder needs service. However, although proven useful, the rotary encoder described in EP1480344 does not provide the user with information about the quality of the installation of the rotary encoder or about the environment in which the encoder is located.

US 2007/118333 relates to monitoring system for machinery facility condition. An abnormality diagnosis system is provided for diagnosing a presence or absence of an abnormality of a bearing unit for a railway vehicle axle. The system feeds back a control signal to a control system of the railway vehicle based on the result of a diagnosis.

US 6,615,156 relates to an abnormal state absolute position detector generating direct digital output. The detector interprets rather than avoids abnormal sensory states. Different combinations of sensors in an array are activated as a marker and travel along a path. The current activation/deactivation state of the array is converted into a digital signal that is indicative of the current absolute position of the marker along the path.

### Summary

Thus, it is an object of the present invention to provide an improved encoder and a method in an encoder for determining one or more parameters where each parameter is related to a type of vibration for the encoder.

This object is according to the present invention achieved by finding different expressions that describe accelerations in different directions at different points of the encoder. These expressions are used to calculate parameters related to the different types of vibration that the encoder is exposed to.

According to a first aspect, the present invention relates to a method for determining one or more parameters, each parameter being related to a type of vibration for an encoder mounted on an axis and arranged to detect rotary movement of the axis, and wherein an element fixed at the encoder prevents the encoder from rotating with the axis; the method comprising the steps of: generating one or more signals, each signal being a response to an acceleration in a direction in a point of the encoder; determining one or more frequency spectrums related to the one or more signals; fitting one or more expressions related to the one or more signals based on the one or more frequency spectrums, where each expression describes an acceleration related to the one or more direction and the one or more points of the encoder; and determining one or more parameters from the one or more expressions, where each parameter is related to a type of vibration for the encoder.

According to a second aspect, the present invention relates to an encoder for determining one or more parameters, each parameters being related to a type of vibration for an encoder mounted on an axis and arranged detect rotary movement of the axis, and wherein an element fixed at the encoder prevents the encoder from rotating with the axis; the encoder comprises at least one accelerometer for generating one or more signals, each signal being a response to an acceleration in a direction in a point of the encoder. The encoder further comprises processing means for determining one or more frequency spectrums related to the one or more signals. The processing means being further configured to fit one or more expressions related to the one or more signals based on the one or more frequency spectrums, where each expression describes an acceleration related to the one or more direction and the one or more points of the encoder. The processing means being yet further configured for determining one or more parameters from the one or more expressions, where each parameter is related to a type of vibration for the encoder.

An advantage with embodiments of the present invention is that by determining parameters related to different types of vibration for the encoder a longer lifetime of the encoder can be achieved since the encoder can be installed with a minimum amount of vibrations.

**Brief description of the drawings**

Figure 1 schematically illustrates an encoder according to an embodiment of the present invention.

Figure 2 is a flow diagram of a method according to an exemplary embodiment of the present invention.

Figure 3 schematically illustrates an encoder according to an embodiment of the present invention.

Figure 5 illustrates a relation between a first coordinate system and a second coordinate system as a function of time.

Figure 6 illustrates a relation between a first coordinate system a second coordinate system and a third coordinate system as a function of time.

Figure 7 shows a plot of x against y for a position at the encoder where x"=40, y"=0, h=50 and e=0.01.

Figure 8 shows a plot of x against y for a position at the encoder where x"=-40, y"=0, h=50 and e=0.01.

Figure 9 shows a plot of x against y for a position at the encoder where x"=0, y"=40, h=50 and e=0.01

Figure 10 shows a plot of x against y for a position at the encoder where x"=0, y"=-40, h=50 and e=0.01

Figure 11 shows a plot of the acceleration in the x-direction against the acceleration in the y-direction in the first coordinate system where x"=0, y"=0, h=50 and e=0.01

Figure 12 shows a plot of the acceleration in the x-direction against the acceleration in the y-direction in the first coordinate system where x"=40, y"=0, h=50 and e=0.01.

Figure 13 shows a plot of the acceleration in the x-direction against the acceleration in the y-direction in the first coordinate system where x"=-40, y"=0, h=50 and e=0.01.

Figure 14 shows a plot of the acceleration in the x-direction against the acceleration in the y-direction in the first coordinate system where x"=0, y"=40, h=50 and e=0.01.

Figure 15 shows a plot of the acceleration in the x-direction against the acceleration in the y-direction in the first coordinate system where x"=0, y"=-40, h=50 and e=0.01.

Figure 16 shows a graph illustrating the measurement error of an encoder mounted on an eccentric axis with e=0.01 and h=50.

Figure 17 illustrates the symmetry axis z" 1800 of the encoder.

Figure 18 illustrates a wobbling motion of the encoder when the symmetry axis z" 1800 of the encoder is not parallel with the symmetry axis z 1810 of the rotation.

Figure 19 illustrates two layers, $z=z_0$ and $z=0$, with the coordinate systems x1", yl" resp.

x2", y2".

Figure 20 illustrates a plot of motions in the x-direction against the y-direction and in the z-direction during one revolution where x"=40, y"=0, g=25, h=50, $e_0=0.01$ and $z_0=100$.

Figure 21 illustrates a plot of accelerations in the x-direction against the y-direction and in the z-direction during one revolution where x"=40, y"=0, g=25, h=50, $e_0=0.01$ and $z_0=100$.

Figure 22 illustrates a plot of accelerations in the x-direction against the y-direction and in the z-direction during one revolution where h=50, $e_0=0.01$, $Z_0=100$, x"=40, y"=0 and g=-43.

**Detailed description**

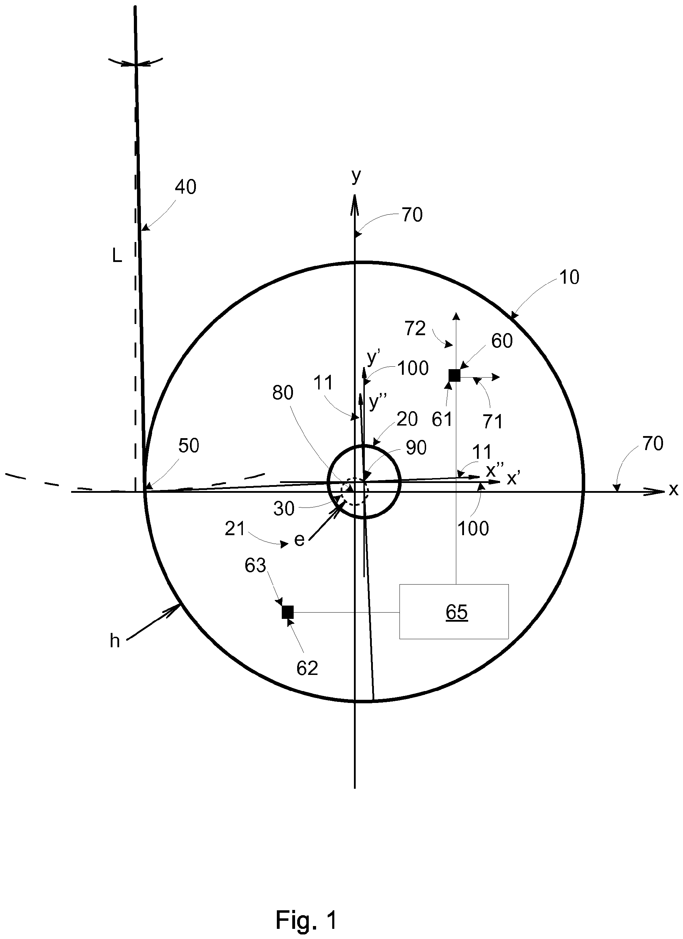

Referring to figure 1 there is illustrated exemplary embodiments of the encoder 10 for determining one or more parameters, each parameter being related to a type of vibration for the encoder 10. The encoder is mounted on an axis 20 and arranged to detect rotary movement of the axis 20.

The encoder 10 may be exposed to many different types of vibrations. One type of vibration that may arise is a vibration that occurs if the axis 20 is out of line. Another type of vibration that may arise is a vibration that occurs if the axis 20 is wobbling. Yet another type of vibration that may arise is a vibration that occurs if there is a play in an element 40 that prevents the encoder from rotating with the axis. The element 40 may for instance be a torque arm 40. The encoder 10 may also be exposed to a vibration that occurs from different types of impacts or vibrations from a motor (not shown). These different types of vibrations are only examples of types of vibrations that the encoder 10 may be exposed to. The encoder 10 may also be exposed to other types of vibrations. The encoder 10 may also be exposed to these different types of vibrations above simultaneously.

The different types of vibrations cause different types of wear to the encoder 10. As mentioned above, due to the wear that the encoder 10 is subjected to the overall condition of the encoder 10 degrades which in turn may lead to malfunctioning of the encoder 10. Some types of vibrations also cause measurement errors from the encoder 10.

According to an idea of the invention it is possible to find different expressions that describe accelerations in different directions at different points of the encoder 10. These expressions can according to the present invention be used to calculate parameters related to the different types of vibration that the encoder is exposed to. How the expressions are used to calculate the different parameters will be described further down. First some examples of how different expressions are found for different possible types of vibrations that the encoder may be exposed to. These expressions are only examples of expression that can be found for accelerations at different points of the encoder 10. These expressions differ if for instance other parameters are used to describe a motion of the axis 20. An example of another factor that affects the expressions is which means that is used to prevent the encoder from rotating. For example a flexible coupling gives a different set of expressions.

In exemplary embodiments of the encoder 10 the element 40 is a torque arm 40 fixed at the encoder 10 that prevents the encoder 10 from rotating with the axis 20. In these exemplary embodiments of the invention a length of the torque arm 40 is L. The distance from a point 50 where the torque arm 40 is fixed to a centre 90 of the rotary encoder is h.

Eccentric axis

As mentioned above one possible type of vibration that the encoder 10 may be exposed to is a vibration that arises in a case when the axis 20 is out of line. For this type of vibration it is possible to find different expressions for accelerations at different points of the encoder 10. Below an example will be given of how expressions for accelerations in different directions at different points of the encoder may be found in a case when the axis 20 is out of line. As can be seen in figure 1 the axis has an eccentricity error which is e 21.

A first coordinate system (x, y) 70 in a plane parallel with the encoder 10 has its centre of origin in a mean centre 80 of the axis 20 during a revolution. A second coordinate system (x', y') 100 has its centre of origin in the encoder 10. The encoder 10 also has its centre of origin in a third coordinate system (x", y") 11 in the plane, but the third coordinate system 11 is turned so that its negative x-axis passes a point 50 where the torque arm is fixed in the encoder.

An expression which describes a position at the encoder as a function of time is sought. The expression that is sought is the expression that describes coordinates in the third coordinate system 11 expressed in coordinates in the first coordinate system 70 as a function of time t. First a relation between the first coordinate system 70 and the second coordinate system 100 is sought. This relation may according to embodiments of the invention be expressed as:

$$(1) \quad (x, y) = (x' + e\cos\omega t, y' + e\sin\omega t);$$

where $\omega$ is hte angular frequency of the axis.

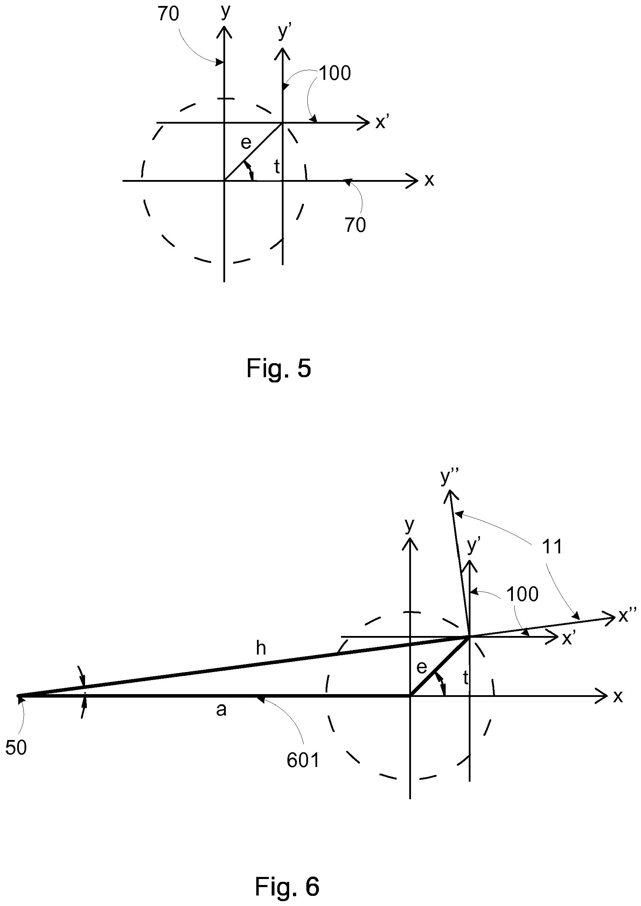

Figure 5 shows the relation between the first coordinate system 70 and the second coordinate system 100 as a function of time t. It is reasonable to assume that a movement of the point 50 where the torque arm 40 is fixed in the encoder 10 is liner since a (fig. 1) can be considered to be small. Fig. 5 illustrates how the point 90 moves in a circle around the origin of centre in the coordinate system 70 at radius e. Axes in the coordinate system 100 are always parallel to the axes of 70.

Referring to figure 6 it is possible to express a position in the second coordinate system 100 as a function of coordinates in the third coordinate system 11 as:

$$(x', y') = (x''\cos\varphi - y''\sin\varphi, x''\sin\varphi + y''\cos\varphi)$$

where $\sin\varphi = \dfrac{e}{h}\sin\omega t$ and $\cos\varphi = \dfrac{a + e\cos\omega t}{h}$

Actually also f can be considered to be small (e<<h), but the exact expressions are kept during the differentiation. As can be seen in figure 6, a is given from the cosine theorem:

$$h^2 = a^2 + e^2 - 2ae\cos(\pi - \omega t) \Rightarrow a = -e\cos\omega t + \sqrt{h^2 - e^2\sin^2\omega t}$$

which yields

$$\cos\varphi = \sqrt{1 - \frac{e^2}{h^2}\sin^2\omega t}$$

and

$$x = x''\sqrt{1 - \frac{e^2}{h^2}\sin^2\omega t} - y''\frac{e}{h}\sin\omega t + e\cos\omega t$$

$$y = x''\frac{e}{h}\sin\omega t + y''\sqrt{1 - \frac{e^2}{h^2}\sin^2\omega t} + e\sin\omega t$$

where (x", y") are the coordinates of a point at the accelerometer in the third coordinate system.

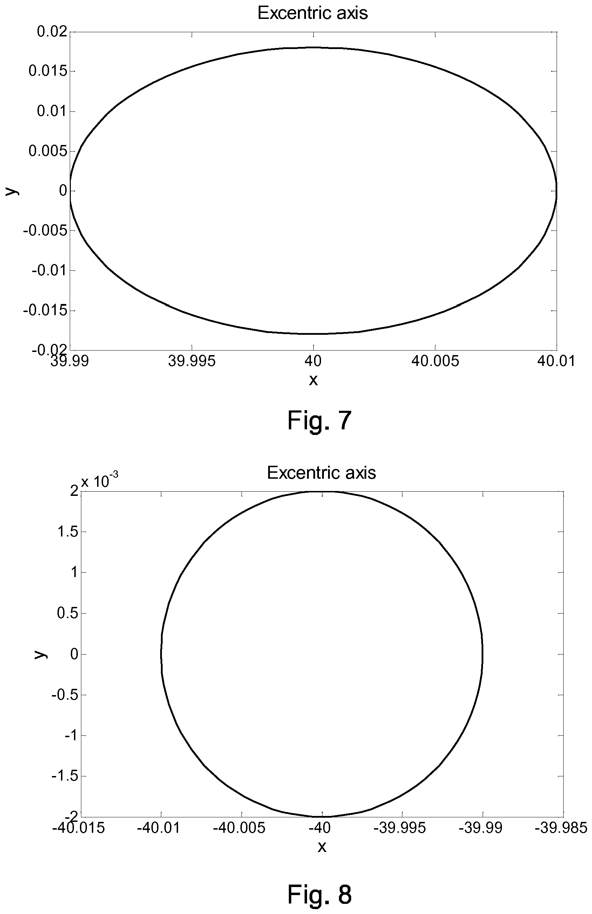

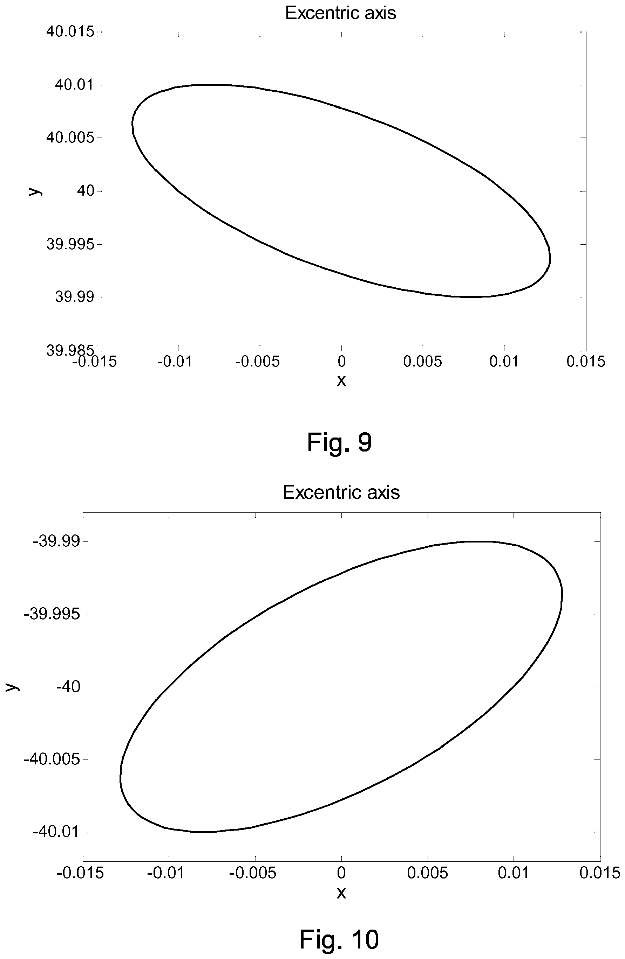

Consider a first example where x"=0 and y"=0. A plot (not shown) of x against y would give a circle around origin of coordinates with the radius e. In another example x"=40, y"=0, h=50 and e=0.01. Figure 7 illustrates this example. As can be seen in figure 7 a movement in this case is amplified in the y-direction. Consider yet another example where x"=- 40, y"=0, h=50 and e=0.01. Figure 8 illustrates this example. As can be seen in figure 8 a movement in this case is reduced in the y-direction. Figure 9 illustrates yet another example where x"=0, y"=40, h=50 and e=0.01. Another example is illustrated in figure 10 where x"=0, y"=-40, h=50 and e=0.01.

An acceleration for a point at the accelerometer 60 as a function of time is given by

$$a_x = \frac{d^2 x}{dt^2} = x'' \left( -\frac{e^4 \omega^2 \sin^2 2\omega t}{4h^4} \left( 1 - \frac{e^2}{h^2} \sin^2 \omega t \right)^{-3/2} - \frac{e^2 \omega^2 \cos 2\omega t}{h^2} \left( 1 - \frac{e^2}{h^2} \sin^2 \omega t \right)^{-1/2} \right) +$$

$$+ y'' \frac{e\omega^2}{h} \sin \omega t - e\omega^2 \cos \omega t$$

$$a_y = \frac{d^2 y}{dt^2} = y'' \left( -\frac{e^4 \omega^2 \sin^2 2\omega t}{4h^4} \left( 1 - \frac{e^2}{h^2} \sin^2 \omega t \right)^{-3/2} - \frac{e^2 \omega^2 \cos 2\omega t}{h^2} \left( 1 - \frac{e^2}{h^2} \sin^2 \omega t \right)^{-1/2} \right) +$$

$$- x'' \frac{e\omega^2}{h} \sin \omega t - e\omega^2 \sin \omega t$$

The expressions are unnecessarily complicated, but they can be seen as a series expansion in e/h (e/h<<1). A linear approximation in e/h gives sufficient accuracy:

$$a_x = y'' \frac{e\omega^2}{h} \sin \omega t - e\omega^2 \cos \omega t$$

$$a_y = -x'' \frac{e\omega^2}{h} \sin \omega t - e\omega^2 \sin \omega t$$

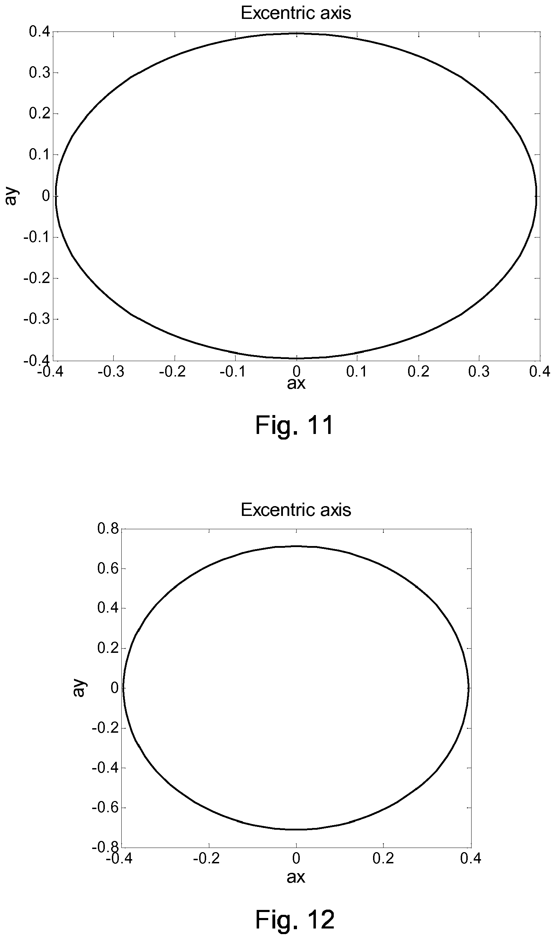

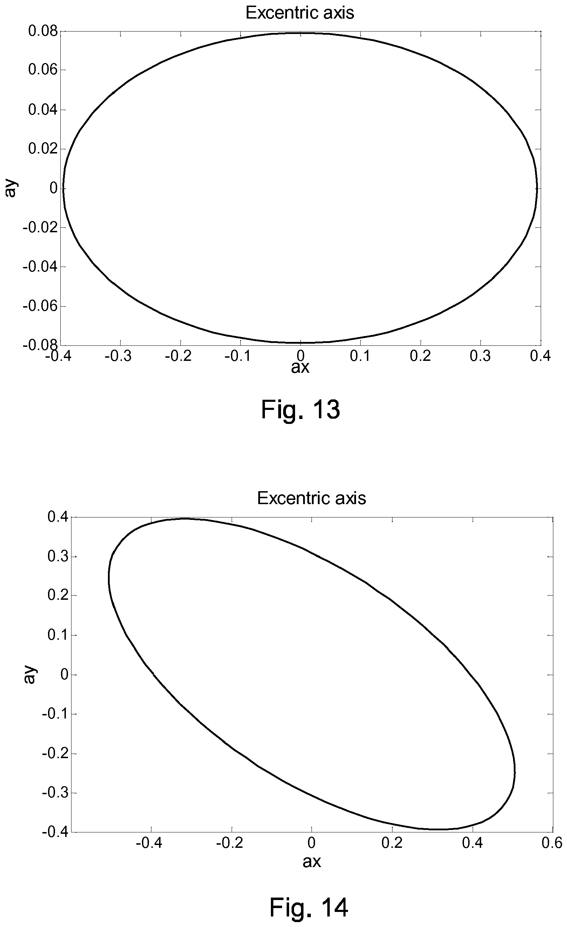

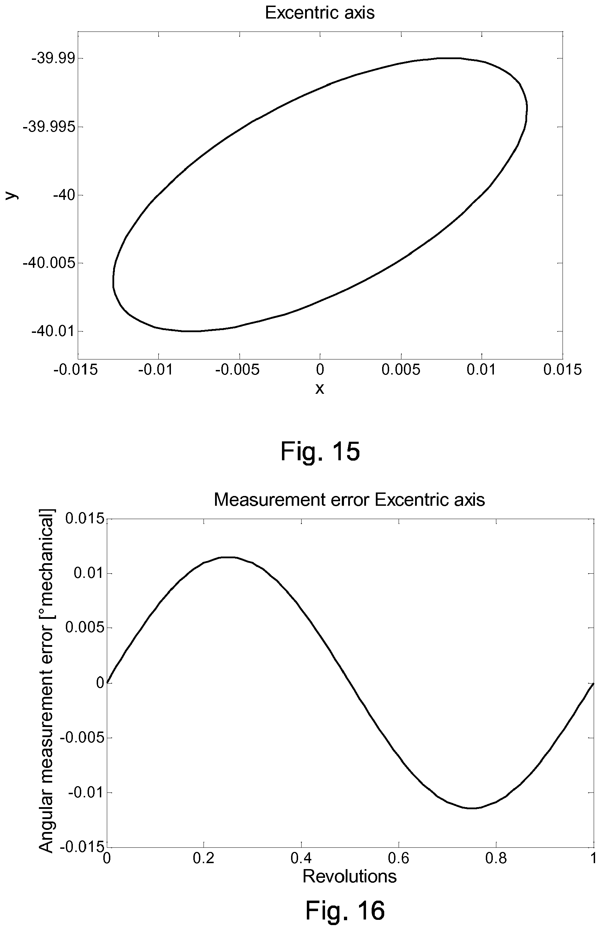

Consider an example where x"=0, y"=0, e=0.01 and h=50. In this example w=2*p rad/s. A plot of the acceleration in the x-direction and the acceleration in the y-direction in the first coordinate system is shown in figure 11. Another example where x"=40, y"=0, h=50 and e=0.01 is illustrated in figure 12. As can be seen in figure 12 a movement in this case is enhanced in the y-direction. Figure 13 illustrates yet another example where x"=-40, y"=0, h=50 and e=0.01.
As can be seen in figure 13 a movement in this case is damped in the y-direction. Figure 14 illustrates yet another example where x"=0, y"=40, h=50 and e=0.01. Yet another example is illustrated in figure 15 where x"=0, y"=-40, h=50 and e=0.01.

Measurement errors of the encoder as a function of time

The error in the measurement of the encoder is the angle f and is given from

$$\sin \varphi = \frac{e}{h} \sin \omega t \Rightarrow \varphi \approx \frac{e}{h} \sin \omega t$$

Figure 16 shows a graph illustrating the measurement error of the encoder. The curve is approximately harmonic with one period per revolution. An amplitude of the curve is approximately e/h*180/p in mechanical degrees. In an example with e=0.01 and h=50 the amplitude will be 0.012° and for a rotary encoder with a resolution of 5000 pulses per revolution (ppr) it corresponds to 60 electrical degrees (° el), i.e. one 6th of a period.

A wobbling axis

Another possible type of vibration that the encoder may be exposed to is a vibration that arises in a case when the axis 20 is wobbling. For this type of vibration it is possible to find other expressions for accelerations at different points of the encoder 10. An example of how expressions may be found for accelerations, in different directions at different points of the encoder in a case when the axis 20 is wobbling is given below.

Position as a function of time for a wobbling axis

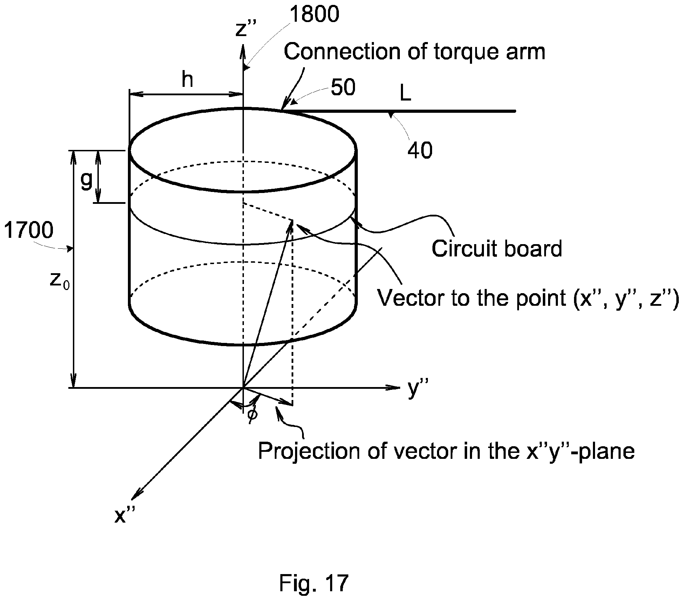

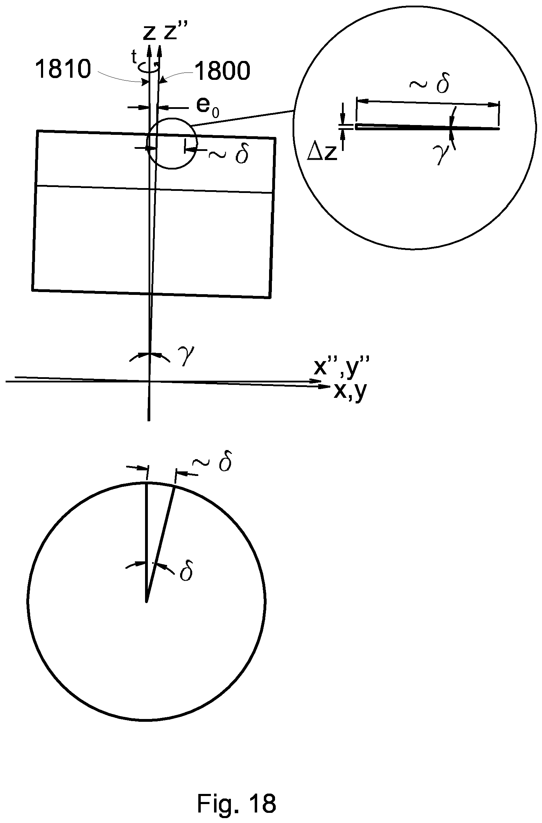

Referring to figure 17 the wobbling is created if the symmetry axis z" 1800 of the encoder is not parallel with the symmetry axis z 1810 of the rotation (see figure 18). The motion of the encoder 10 is three dimensional and rather complex, therefore some simplifications are made.

First it is considered that the movement of the point 50 where the torque arm 40 is fixed in the encoder can be considered to be linear analogously to a being small in the eccentric axis case.

In the z-direction the turning in the x"y"-plane is disregarded. This turning corresponds to the error in the angular measurement. If the encoder is doing a wobbling motion without rotating around its own axis, an arbitrary point in the encoder, will move in the z-direction according to:

$$\Delta z \approx \gamma \sqrt{(x'')^2 + (y'')^2} \, \mathrm{X}(t) \propto \gamma, \quad \gamma \ll 1,$$

X is an unspecified function of time;

The dominating contribution to the motion is thus linear in $\gamma$, the angle between the axis 1810 and the encoder 1800 of fig. 18. Note that the motion is independent from the value of z". It is possible to show that the turning in the x"y"-plane that was neglected above contributes with a second order term in g, which is the reason it can be considered small. Intuitively it can be viewed in the following way, with the help of fig. 18. Let the encoder rotate a small angle d, caused by the small angle f. The distance that a point in the encoder will move is proportional to d and in the z-direction the movement will be proportional to gd, which is much smaller than g. $\Delta z \propto \gamma\delta \ll \gamma$ By forming thin layers of the encoder at different positions in the z-direction and then look at the layers separately the problem is reduced from one problem in three dimensions to a multiple of problems in two dimensions. The idea is to start in the layer where the torque arm 40 is fixed. In this layer or plane z is equal to $Z_0$ 1700. For the motion in the plane where $z=z_0$ one can make the simplification that the x", y"-plane is parallel with the x, y-plane and that the z"-axis is parallel with the z-axis but out of line with the eccentricity $e_0=e(z_0)$. The results from the case with an eccentric axis can then be used. For an arbitrary layer it is valid that the eccentricity is, $e = e_0 \dfrac{z}{z_0}$.

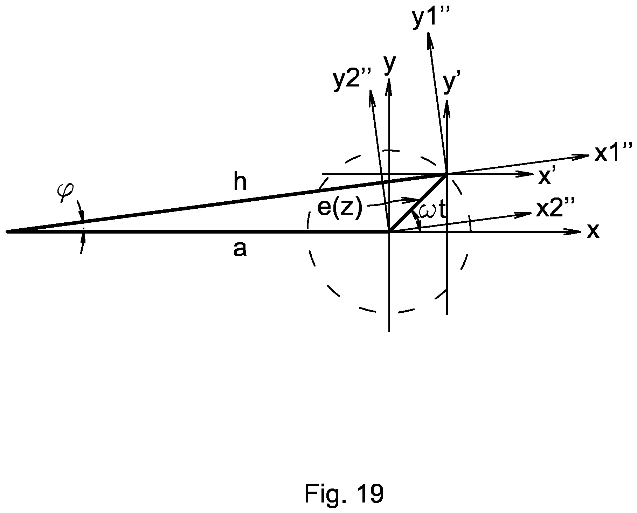

This means that the terms in the equations of motion corresponding to a translation should be scaled in a corresponding way. Those terms are the ones that do not contain the variables x" or y". We call them f-independent. Figure 19 illustrates two layers, $z=z_0$ and $z=0$, with the coordinate systems x1"y1" resp. x2"y2". The angle f is the same for the two layers, since the encoder is rigid. This means that the f-dependent terms of the equations of motion, i.e. those containing x" or y", should not be scaled at all.

An interesting plane is the plane where a circuit board is located, $z=z_0-g$. In this plane it is now possible to express the coordinates of a point in an arbitrary z-plane as a function of time.

The coordinates may be expressed as:

$$x = x'' - y'' \frac{e_0}{h} \sin \omega t + \frac{z_0 - g}{z_0} e_0 \cos \omega t$$

$$y = x'' \frac{e_0}{h} \sin \omega t + y'' + \frac{z_0 - g}{z_0} e_0 \sin \omega t$$

$$z = z_0 - g - \frac{e_0}{z_0} \cos(\omega t + \phi) \sqrt{(x'')^2 + (y'')^2}$$

The expression for z is given from figure 18 and also that $\omega t = 0$ when a projection of a rotation axis in the xy-plane coincides with the x-axis (See figure 19, where e(z) is that projection). The angle $\phi$ is also found in figure 17 and only affects "a phase" for the motion (in relation to phases for x- and y-coordinates)

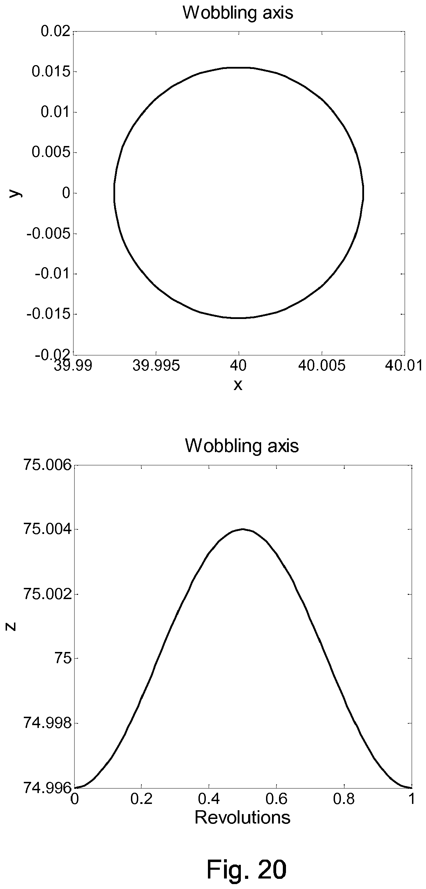

Consider an example where h=50, $e_0$=0.01 and $z_0$=100. In this example x"=40, y"=0 and g=25. A plot of motions in the x-direction, the y-direction and in the z-direction for this example is shown in figure 20.

The accelerations in x, y and z-directions are given from a second derivative of the expression for the positions.

$$a_x = \frac{d^2 x}{dt^2} = y'' \frac{e_0 \omega^2}{h} \sin \omega t - \frac{z_0 - g}{z_0} e_0 \omega^2 \cos \omega t$$

$$a_y = \frac{d^2 y}{dt^2} = -x'' \frac{e_0 \omega^2}{h} \sin \omega t - \frac{z_0 - g}{z_0} e_0 \omega^2 \sin \omega t$$

$$a_z = \frac{d^2 z}{dt^2} = \frac{e_0 \omega^2}{z_0} \cos(\omega t + \phi) \sqrt{(x'')^2 + (y'')^2}$$

Note that as $z_0$ grows large the expressions above become the same as in the case with an eccentric axis without wobble.

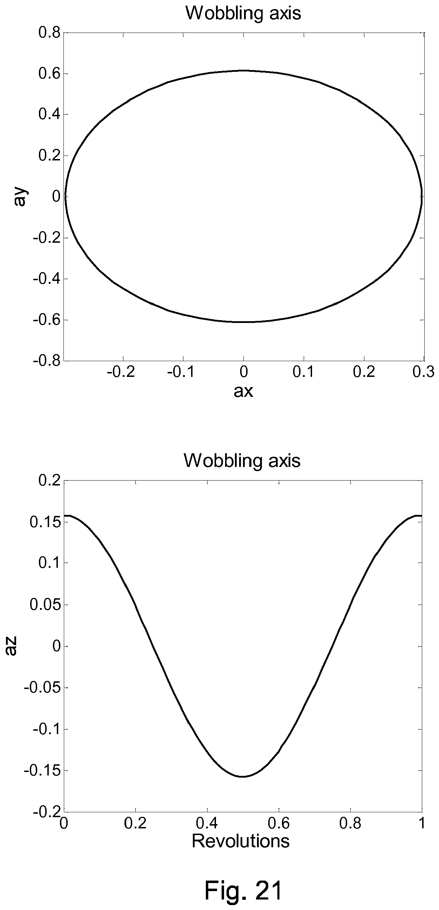

Consider an example where h=50, $e_0$=0.01 and $z_0$=100. In this example x"=40, y"=0 and g=25. A plot of accelerations in the x-direction, y-direction and in the z-direction are shown for this example in figure 21

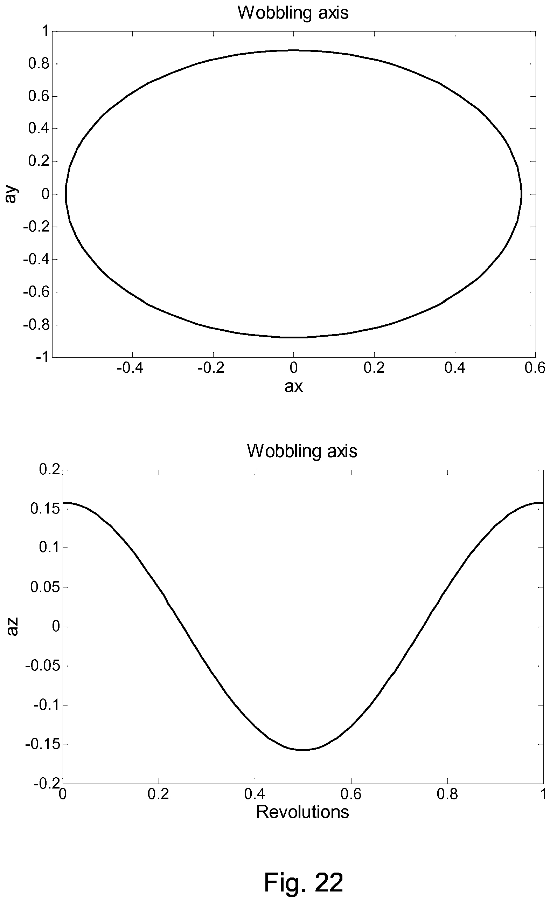

In another example h=50, $e_0$=0.01, $Z_0$=100, x"=40, y"=0 and g=-43. A plot of accelerations in the x-direction, in the y-direction and in the z-direction for this example is shown in figure 22.

The error in angular measurement as a function of time is similar to before

$$\sin \varphi = \frac{e_0}{h} \sin \omega t \Rightarrow \varphi \approx \frac{e_0}{h} \sin \omega t$$

Direct acceleration

Yet another possible type of vibration that the encoder may be exposed to is a vibration that arises from different types of impacts or vibrations from a motor. For this type of vibration it is possible to find other expressions for accelerations at different points of the encoder 10. An example of how expressions for accelerations, in different directions at different points of the encoder, is given below.

To the theoretical accelerations that the encoder may be exposed to because of for instance an eccentric axis or a wobbling axis may thus other accelerations be added. We denominate those other accelerations direct accelerations $\overline{s}(t)$. The expressions for the accelerations in the different directions may now be written as:

$$\begin{cases} a_x = y'' \dfrac{e_0 \omega^2}{h} \sin \omega t - (e_0 - \gamma g) \omega^2 \cos \omega t + s_x(t) \\[2mm] a_y = -x'' \dfrac{e_0 \omega^2}{h} \sin \omega t - (e_0 - \gamma g) \omega^2 \sin \omega t + s_y(t) \\[2mm] a_z = \gamma \omega^2 \cos(\omega t + \phi) \sqrt{(x'')^2 + (y'')^2} + s_z(t) \end{cases} \qquad (9)$$

Where the quantity $\dfrac{e_0}{z_0}$ has been replaced by g.

As mentioned above it is according to the present invention possible to determine different parameters related to the different types of vibrations that the encoder 10 may be exposed to. Parameters that may be of interest to determine with the present invention are for instance run out 2* $e_0$ and an angle of the axis $\gamma = \dfrac{e_0}{z_0}$.

Referring back to figure 1 which shows exemplary embodiments of the encoder 10 according to the present invention. The encoder 10 comprises at least one accelerometer 61, 62 for generating one or more signals $si_1$, $si_2$ ...

$si_n$, each signal $si_1$, $si_2$ ... $si_n$ being a response to acceleration in a direction in a point 60, 63 of the encoder 10.

First are exemplary embodiments of the encoder 10 that comprise one accelerometer 61 that measures acceleration in one direction (not shown) described. In these exemplary embodiments of the encoder 10 the accelerometer 61 generates one signal $si_1$ which is a response to acceleration in one direction in a point 60 of the encoder 10. The accelerations in the x, y and z-directions can be described using equation (9). In these exemplary embodiments of the encoder 10 it is assumed that the direct acceleration $s_1$ for the axis 20 is not harmonic with one period per revolution.

Note that the accelerations in the x- and y-directions mostly depend on $e_0$ and g, and that the z-direction mostly depends on g. The accelerations that are generated from an eccentric axis 20 or a wobbling axis 20 are also harmonic with one period per revolution of the axis 20. In exemplary embodiments of the encoder 10 $e_0$ and g are used to describe a motion of the axis 20. When using $e_0$ and g to describe the motion of the axis 20 it is advantageous to measure the acceleration in the x-y-plane or in the z-direction. If other parameters were used to describe the motion of the axis 20 it could also be advantageous to measure the acceleration in other directions. The present invention is therefore not limited to measuring the acceleration in the x-y-plane or in the z-direction. These directions only constitute exemplary embodiments of the encoder 10.

Examples of how $e_0$ and g may be calculated in exemplary embodiments where a single accelerometer 60 is used will now be given. The parameters $a_1$, $a_2$, and $a_3$ are scale factors used to express the acceleration in the actual direction of measurement in the coordinates of the coordinate system 11. The expression for an acceleration $a_1$ can be written as:

$$a_1 = \alpha_1 a_x(e_0,\gamma,t) + \alpha_2 a_y(e_0,\gamma,t) + \alpha_3 a_z(\gamma,t) + s_1(t)$$

Assume that g is approximately zero. If g can not be considered small the acceleration should instead be measured in the z-direction. The acceleration can now be expressed as:

$$a_1 = \alpha_1 a_x + \alpha_2 a_y + s_1 \Rightarrow a_1 = e_0 k \sin(\omega t + \delta) + s_1 \tag{100}$$

where $\tan\delta = \dfrac{k_2}{k_1}$

Assume that the direct acceleration $s_1$ is not harmonic with one cycle per revolution for the axis 20.

The encoder 10 further comprises processing means 65 which receives the signal $si_1$. The processing means 65 are configured for determining a frequency spectrum $F_{si1}$ related to the signal $si_1$. The processing means 65 are yet further configured to fit the sinus term in the expression 100 to the frequency spectrum $F_{si1}$ for the signals $si_1$. An amplitude $A_m$ for a frequency component $F_r$ in the frequency spectrum $F_{si1}$ which corresponds to the first harmonic for the axis 20 is determined by the processing means 65. The processing means 65 then fits the sinus term in the expression 100 to the signal $si_1$ based on the amplitude for the frequency component $F_r$ in the frequency spectrum $F_{si1}$. The processing means 65 thereby determine $e_0$ as:

$$e_0 = \frac{1}{k} Am \tag{101}$$

The direct acceleration may then be determined by the processing means 65 as:

$$s_1 = si_1 - e_0 k \sin(\omega t + \delta)$$

In other exemplary embodiments of the encoder 10 the accelerometer 61 instead measures the acceleration in the z-direction. In these exemplary embodiments of the encoder 10 $a_1$ and $a_2$ close to zero and $a_3$ is close to 1. The acceleration $a_1$ may be expressed as:

$$a_1 = \alpha_3 a_z + s_1 = \alpha_3 \gamma \omega^2 \cos(\omega t + \phi)\sqrt{x''^2 + y''^2} + s_1 = \gamma k \cos(\omega t + \phi) + s_1 \qquad (102)$$

where k is a known constant

Assume that the direct acceleration $s_1$ is not harmonic with one period per revolution for the axis 20. In these exemplary embodiments the processing means 65 also determines a frequency spectrum $F_{si1}$ related to the signal $si_1$. An amplitude $A_m$ for a frequency component $F_r$, which corresponds to a cycle of once per revolution, in the frequency spectrum $F_{si1}$ is determined by the processing means 65. The processing means 65 then fits the co sinus term in the expression 102 to the signal $si_1$ based on the amplitude $A_m$. The processing means 65 thereby determine gas:

$$\gamma = \frac{1}{k} Am \qquad (103)$$

The direct acceleration may then be determined by the processing means 65 as:

$$s_1 = si_1 - \gamma k \cos(\omega t + \phi)$$

Now exemplary embodiments of the encoder 10, that comprise one accelerometer 61 that measures acceleration $a_1$ and $a_2$ in two directions (not shown), will be described. In these exemplary embodiments of the encoder 10 the accelerometer 61 generates two signals $si_1$ and $si_2$ which are responses to accelerations $a_1$ and $a_2$ in two directions in the point 60 of the encoder 10. The accelerations $a_1$ and $a_2$ can be written as:

$$\begin{cases} a_1 = \alpha_1 a_x(e_0, \gamma, t) + \alpha_2 a_y(e_0, \gamma, t) + \alpha_3 a_z(\gamma, t) + s_1(t) \\ a_2 = \alpha_4 a_x(e_0, \gamma, t) + \alpha_5 a_y(e_0, \gamma, t) + \alpha_6 a_z(\gamma, t) + s_2(t) \end{cases} \Rightarrow$$

$$\begin{cases} a_1 = (e_0 c_1 + \gamma c_2)\sin\omega t + (e_0 c_3 + \gamma c_4)\cos\omega t + \gamma c_5 \cos(\omega t + \phi) + s_1 \\ a_2 = (e_0 c_6 + \gamma c_7)\sin\omega t + (e_0 c_8 + \gamma c_9)\cos\omega t + \gamma c_{10} \cos(\omega t + \phi) + s_2 \end{cases} \Rightarrow$$

$$\begin{cases} a_1 = k_1 \sin(\omega t + \delta_1) + s_1 \\ a_2 = k_2 \sin(\omega t + \delta_2) + s_2 \end{cases} \qquad (104, 105)$$

where $c_1$, $c_2$,...$c_{10}$ are known constants and $k_1$, $k_2$, $d_1$ and $d_2$ are known functions of $e_0$ and $\gamma$. In these exemplary embodiments the processing means 65 are configured to determine frequency spectrums $F_{si1}$ and $F_{si2}$ related to each of the signals $si_1$ and $si_2$ respectively.

The processing means 65 then fits the sinus term in the expressions 104 and 105 to the first harmonic of the signal $si_1$ and $si_2$ respectively, based on the frequency spectrums for the signals. Amplitudes $Am_1$ and $Am_2$ for frequency components in the frequency spectrums $F_{si1}$ and $F_{si2}$, which corresponds to the first harmonic for the axis 20 is determined for $si_1$ and $si_2$ by the processing means 65. The processing means 65 thereby determine $e_0$ and $\gamma$ by solving the equation system:

$$\begin{cases} k_1(e_0, \gamma) = Am_1 \\ k_2(e_0, \gamma) = Am_2 \end{cases}$$

The direct accelerations $s_1$ and $s_2$ may be considered as remaining parts of the signals $si_1$ and $si_2$. The direct

accelerations $s_1$ and $s_2$ can be determined by the processing means 65 as:

$$\begin{cases} s_1 = si_1 - k_1 \sin(\omega t + \delta_1) \\ s_2 = si_2 - k_2 \sin(\omega t + \delta_2) \end{cases}$$

Other exemplary embodiments of the encoder 10 comprise one accelerometer 61 that measures acceleration $a_1$, $a_2$ and $a_3$ in three directions (not shown). In these exemplary embodiments of the encoder 10 the accelerometer 61 generates three signals $si_1$, $si_2$ and $si_3$ which are responses to accelerations $a_1$, $a_2$ and $a_3$ in three directions (not shown) in the point 60 of the encoder 10. The accelerations $a_1$, $a_2$ and $a_3$ may be written as:

$$\begin{cases} a_1 = \alpha_1 a_x(e_0,\gamma,t) + \alpha_2 a_y(e_0,\gamma,t) + \alpha_3 a_z(\gamma,t) + s_1(t) \\ a_2 = \alpha_4 a_x(e_0,\gamma,t) + \alpha_5 a_y(e_0,\gamma,t) + \alpha_6 a_z(\gamma,t) + s_2(t) \Rightarrow \\ a_3 = \alpha_5 a_x(e_0,\gamma,t) + \alpha_8 a_y(e_0,\gamma,t) + \alpha_9 a_z(\gamma,t) + s_3(t) \end{cases}$$

$$\begin{cases} a_1 = (e_0 c_1 + \gamma c_2)\sin\omega t + (e_0 c_3 + \gamma c_4)\cos\omega t + \gamma c_5 \cos(\omega t + \phi) + s_1 \\ a_2 = (e_0 c_6 + \gamma c_7)\sin\omega t + (e_0 c_8 + \gamma c_9)\cos\omega t + \gamma c_{10} \cos(\omega t + \phi) + s_2 \Rightarrow \\ a_3 = (e_0 c_{11} + \gamma c_{12})\sin\omega t + (e_0 c_{13} + \gamma c_{14})\cos\omega t + \gamma c_{15} \cos(\omega t + \phi) + s_3 \end{cases}$$

$$\begin{cases} a_1 = k_1 \sin(\omega t + \delta_1) + s_1 \\ a_2 = k_2 \sin(\omega t + \delta_2) + s_2 \\ a_3 = k_3 \sin(\omega t + \delta_3) + s_3 \end{cases}$$

$(106, 107, 108$

where,
$c_1, c_2,.......c_{15}$ are known constants and $k_1, k_2, k_3, d_1, d_2$ and $d_3$ are known functions of $e_0$ and g
In these exemplary embodiments the processing means 65 are configured to determine frequency spectrums $F_{si1}$, $F_{si2}$ and $F_{si3}$ related to each of the signals $si_1$, $si_2$ and $si_3$ respectively.
The processing means 65 then fits the sinus term in the expressions 106, 107 and 108 to the signals $si_1$, $si_2$ and $si_3$ respectively based on the frequency spectrums $F_{si1}$, $F_{si2}$ and $F_{si3}$ for the signals. Amplitudes $Am_1$, $Am_2$ and $Am_3$ for frequency components $F_{rsi1}$, $F_{rsi2}$ and $F_{rsi3}$ in the frequency spectrums $F_{si1}$, $F_{si2}$, and $F_{si3}$ which corresponds to the first harmonic for the axis 20 is determined for $si_1$, $si_2$ and $si_3$ by the processing means 65.
The processing means 65 then determines $e_0$ and g by finding a solution to the over determined equation system 109. The processing means may for instance use the method of least squares to find a solution to the system 109.

$$\begin{cases} k_1(e_0,\gamma) = Am_1 \\ k_2(e_0,\gamma) = Am_2 \\ k_3(e_0,\gamma) = Am_3 \end{cases}$$

$(109)$

The direct accelerations $s_1$, $s_2$ and $s_3$ may be considered as the remaining parts of the signals $si_1$, $si_2$ and $si_3$. The direct accelerations $s_1$, $s_2$ and $s_3$ can be determined by the processing means 65 as:

$$\begin{cases} s_1 = si_1 - k_1(e_0,\gamma)\sin(\omega t + \delta_1) \\ s_2 = si_2 - k_2(e_0,\gamma)\sin(\omega t + \delta_2) \\ s_3 = si_3 - k_3(e_0,\gamma)\sin(\omega t + \delta_3) \end{cases}$$

Yet other exemplary embodiments of the encoder 10 comprise two accelerometers 61 and 62 that each measures acceleration in one direction respectively. The accelerometer 61 measures acceleration $a_1^{(1)}$ and the accelerometer 62 measures acceleration $a_1^{(2)}$. The upper index denotes that the accelerations are measured in different positions of the encoder 10.

In these exemplary embodiments of the encoder 10 the accelerometer 61 generates the signal $si_1^{(1)}$ which is a response to acceleration $a_1^{(1)}$ in a direction (not shown) in the point 60 of the encoder 10. The accelerometer 62 generates the signal $si_1^{(2)}$ which is a response to acceleration $a_1^{(2)}$ in a direction (not shown) in the point 63 of the encoder 10. In exemplary embodiments of the encoder 10 the accelerometers 62 and 63 measure the accelerations in a same direction (not shown). In these exemplary embodiments the processing means may analyse a differential signal which is a difference between the signals $si_1^{(1)}$ and $si_1^{(2)}$. In exemplary embodiments where the accelerometers 61 and 62 measure the accelerations in the same direction the accelerations $a_1^{(1)}$ and $a_1^{(2)}$ may be written as.

$$\begin{cases} a_1^{(1)} = \alpha_1 a_x^{(1)}(e_0,\gamma,t) + \alpha_2 a_y^{(1)}(e_0,\gamma,t) + \alpha_3 a_z^{(1)}(\gamma,t) + s_1(t) \\ a_1^{(2)} = \alpha_1 a_x^{(2)}(e_0,\gamma,t) + \alpha_2 a_y^{(2)}(e_0,\gamma,t) + \alpha_3 a_z^{(2)}(\gamma,t) + s_1(t) \end{cases}$$

If the equations for $a_1^{(1)}$ and $a_1^{(2)}$ are subtracted from each other the direct acceleration $s_1(t)$ disappears and an equation with two unknown parameters is left.

Consider an exemplary embodiment where $a_1$ and/or $a_2$ are close to 1 and $a_3$ is close to 0. In these exemplary embodiments the accelerations $a_1^{(1)}$ and $a_1^{(2)}$ are measured in a plane parallel with the xy-plane. In these exemplary embodiments g is considered small.

The difference between the accelerations can be expressed as:

$$a_1^{(2)} - a_1^{(1)} = e_0 k \sin(\omega t + \beta) \tag{109}$$

where k and b are known constants. Note that the direct accelerations $s_1(t)$ are cancelled out.

In these exemplary embodiments the processing means 65 are configured to determine a frequency spectrums $F_d$ for a differential signal $si_d$ where the differential signal is a difference between $si_1^{(1)}$ and $si_1^{(2)}$. The processing means 65 then fits the sinus term in the expression 109 to the differential signal $si_d$ based on the frequency spectrum $F_d$ for the signal. An amplitude $Am_1$ for a frequency components $F_{rd}$ in the frequency spectrums $F_d$ which corresponds to the first harmonic is determined for $si_d$ by the processing means 65.

The processing means 65 then determines $e_0$ as

$$e_0 = \frac{1}{k} * Am_1$$

The direct acceleration $s_1(t)$ can be determined by the processing means 65 as:

$$s_1(t) = si_1^{(1)} - e_0 c \sin(\omega t + \delta)$$

where c and d are known constants.

In other exemplary embodiments of the encoder 10 that comprise two accelerometers 61 and 62 the accelerations $a_1^{(1)}$ and $a_1^{(2)}$ are measured along an axis parallel with the z-axis. In these exemplary embodiments $a_1$ and $a_2$ are close to 0 and $a_3$ is close to 1. The difference between the accelerations can be expressed as:

$$a_1^{(2)} - a_1^{(1)} = k_1 \gamma (\cos(\omega t + \phi^{(2)}) - \cos(\omega t + \phi^{(1)})) = k\gamma \sin(\omega t + \beta) \tag{110}$$

where $k_1$, k and b are known constants.

In these exemplary embodiments the processing means 65 are also configured to determine a frequency spectrum $F_d$ for a differential signal $si_d$ which is a difference between $s_1^{(1)}$ and $si_1^{(2)}$.

The processing means 65 then fits the sinus term in the expression 110 to the differential signal $si_d$ based on the frequency spectrum $F_d$ for the signal. An amplitude $Am_1$ for a frequency component $F_{rd}$ in the frequency spectrum $F_d$ which corresponds to the first harmonic is determined for $si_d$ by the processing means 65.

The processing means 65 then determines g as:

$$\gamma = \frac{1}{k} * Am1$$

The direct acceleration $s_1(t)$ can be determined by the processing means 65 as:

$$s_1(t) = si_1^{(1)} - \gamma c \cos(\omega t + \phi^{(1)})$$

where c is a known constant. In other exemplary embodiments the direct acceleration may be determined by the processing means 65 from the generalized expression: $s_1(t) = si_1^{(1)} - \gamma c_1 \sin(\omega t + \delta)$ Where $c_1$ and $\delta$ are known constants.

Other exemplary embodiments of the encoder 10 comprise two accelerometers 61 and 62 that each measures acceleration in two directions respectively. The accelerometer 61 measures accelerations $a_1^{(1)}$, $a_2^{(1)}$ and the accelerometer 62 measures accelerations $a_1^{(2)}$, $a_2^{(2)}$. The upper index denotes that the accelerations are measured in different positions of the encoder 10. In these exemplary embodiments of the encoder 10 the accelerometer 61 generates the signals $si_1^{(1)}$ and $si_2^{(1)}$ which are responses to accelerations $a_1^{(1)}$ and $a_2^{(1)}$ in two directions (not shown) in the point 60 of the encoder 10. The accelerometer 62 generates the signals $si_1^{(2)}$, $si_2^{(2)}$ which are responses to accelerations $a_1^{(2)}$, $a_2^{(2)}$ in two directions (not shown) in the point 63 of the encoder 10. In exemplary embodiments of the encoder 10 the accelerometers 62 and 63 measure the accelerations in the same directions (not shown). In these exemplary embodiments the processing means 65 may analyse differential signals which are a difference between the signals $si_1^{(1)}$, $si_1^{(2)}$, and $si_2^{(1)}$, $si_2^{(2)}$ respectively. In exemplary embodiments where the accelerometers 61 and 62 measure the accelerations in the same directions the accelerations $a_1^{(1)}$, $a_2^{(1)}$, $a_1^{(2)}$ and $a_2^{(2)}$ may be expressed as.

$$\begin{cases} a_1^{(1)} = \alpha_1 a_x^{(1)}(e_0, \gamma, t) + \alpha_2 a_y^{(1)}(e_0, \gamma, t) + \alpha_3 a_z^{(1)}(\gamma, t) + s_1(t) \\ a_1^{(2)} = \alpha_1 a_x^{(2)}(e_0, \gamma, t) + \alpha_2 a_y^{(2)}(e_0, \gamma, t) + \alpha_3 a_z^{(2)}(\gamma, t) + s_1(t) \\ a_2^{(1)} = \alpha_4 a_x^{(1)}(e_0, \gamma, t) + \alpha_5 a_y^{(1)}(e_0, \gamma, t) + \alpha_6 a_z^{(1)}(\gamma, t) + s_2(t) \\ a_2^{(2)} = \alpha_4 a_x^{(2)}(e_0, \gamma, t) + \alpha_5 a_y^{(2)}(e_0, \gamma, t) + \alpha_6 a_z^{(2)}(\gamma, t) + s_2(t) \end{cases}$$

The signals $si_1^{(1)}$, $si_2^{(1)}$, $si_1^{(2)}$ and $si_2^{(2)}$ may be analysed differentially. If the equations for the respective direction are subtracted from each other the direct accelerations $s_1(t)$, $s_2(t)$ disappear and a system with two equations and two unknown parameters is left. Both characteristic parameters $e_0$ and $\gamma$ can then be determined. The difference between the accelerations in the same direction can be expressed as:

$$\begin{cases} a_1^{(2)} - a_1^{(1)} = k_1 \sin(\omega t + \beta_1) \\ a_2^{(2)} - a_2^{(1)} = k_2 \sin(\omega t + \beta_2) \end{cases}$$

$$(111, 112)$$

where $k_1$, $k_2$, $b_1$ and $b_2$ are known functions of $e_0$ and $\gamma$.

In these exemplary embodiments the processing means 65 are configured to determine frequency spectrums $F_{d1}$ and $F_{d2}$ for each of the differential signals $si_{d1}$ and $si_{d2}$. $si_{d1}$ is a difference between $si_1^{(1)}$ and $si_1^{(2)}$. $si_{d2}$ is a difference between $si_2^{(1)}$ and $si_2^{(2)}$. The processing means 65 then fits the sinus term in the expression 111 to the differential signal $si_{d1}$ based on the frequency spectrum $F_{d1}$ for the signal $si_{d1}$ An amplitude $A_{md1}$ for a frequency components $F_{rd1}$ in the frequency spectrums $F_{d1}$ which corresponds to the first harmonic is determined for $si_{d1}$ by the processing means 65. The processing means 65 also fits the sinus term in the expression 112 to the differential signal $si_{d2}$ based on the frequency spectrum $F_{d2}$ for the signal $si_{d2}$. An amplitude $A_{md2}$ for a frequency components $F_{rd2}$ in the frequency spectrums $F_{d2}$ which corresponds the first harmonic is determined for $si_{d2}$ by the processing means 65.

The processing means 65 then determines $e_0$ and g by solving the equation system:

$$\begin{cases} k_1(e_0, \gamma) = A_{md1} \\ k_2(e_0, \gamma) = A_{md2} \end{cases}$$

The direct acceleration $s_1(t)$ and $s_2(t)$ can be determined by the processing means 65 as:

$$\begin{cases} s_1(t) = si_1^{(1)} - c_1 \sin(\omega t + \delta_1) \\ s_2(t) = si_2^{(1)} - c_2 \sin(\omega t + \delta_2) \end{cases}$$

where $c_1$, $c_2$, $d_1$, $d_2$ are known functions of $e_0$ and $\gamma$.

Other exemplary embodiments of the encoder 10 comprise two accelerometers 61 and 62 that each measures acceleration in three directions respectively. The accelerometer 61 measures accelerations $a_1^{(1)}$, $a_2^{(1)}$ and $a_3^{(1)}$, the accelerometer 62 measures accelerations $a_1^{(2)}$, $a_2^{(2)}$ and $a_3^{(2)}$. The upper index denotes that the accelerations are measured in different positions of the encoder 10. In these exemplary embodiments of the encoder 10 the accelerometer 61 generates the signals $si_1^{(1)}$, $si_2^{(1)}$ and $si_3^{(1)}$ which are responses to accelerations $a_1^{(1)}$, $a_2^{(1)}$ and $a_3^{(1)}$ in three directions (not shown) in the point 60 of the encoder 10. The accelerometer 62 generates the signals $si_1^{(2)}$, $si_2^{(2)}$ and $si_3^{(2)}$ which are responses to accelerations $a_1^{(2)}$, $a_2^{(2)}$ and $a_3^{(2)}$ in three directions (not shown) in the point 63 of the encoder 10. In exemplary embodiments of the encoder 10 the accelerometers 62 and 63 measure the accelerations in the same directions (not shown). In these exemplary embodiments the processing means may analyse differential signals which are a difference between the signals $si_1^{(1)}$, $si_1^{(2)}$, and $si_2^{(1)}$, $si_2^{(2)}$ and $si_3^{(1)}$, $si_3^{(2)}$ respectively. In exemplary embodiments where the accelerometers 61 and 62 measure the accelerations in the same directions the accelerations $a_1^{(1)}$, $a_2^{(1)}$, $a_3^{(1)}$, $a_1^{(2)}$, $a_2^{(2)}$ and $a_3^{(2)}$ may be expressed as.

$$\begin{cases} a_1^{(1)} = \alpha_1 a_x^{(1)}(e_0,\gamma,t) + \alpha_2 a_y^{(1)}(e_0,\gamma,t) + \alpha_3 a_z^{(1)}(\gamma,t) + s_1(t) \\ a_1^{(2)} = \alpha_1 a_x^{(2)}(e_0,\gamma,t) + \alpha_2 a_y^{(2)}(e_0,\gamma,t) + \alpha_3 a_z^{(2)}(\gamma,t) + s_1(t) \\ a_2^{(1)} = \alpha_4 a_x^{(1)}(e_0,\gamma,t) + \alpha_5 a_y^{(1)}(e_0,\gamma,t) + \alpha_6 a_z^{(1)}(\gamma,t) + s_2(t) \\ a_2^{(2)} = \alpha_4 a_x^{(2)}(e_0,\gamma,t) + \alpha_5 a_y^{(2)}(e_0,\gamma,t) + \alpha_6 a_z^{(2)}(\gamma,t) + s_2(t) \\ a_3^{(1)} = \alpha_7 a_x^{(1)}(e_0,\gamma,t) + \alpha_8 a_y^{(1)}(e_0,\gamma,t) + \alpha_9 a_z^{(1)}(\gamma,t) + s_3(t) \\ a_3^{(2)} = \alpha_7 a_x^{(2)}(e_0,\gamma,t) + \alpha_8 a_y^{(2)}(e_0,\gamma,t) + \alpha_9 a_z^{(2)}(\gamma,t) + s3(t) \end{cases}$$

The signals $si_1^{(1)}$, $si_2^{(1)}$, $si_3^{(1)}$, $si_1^{(2)}$, $si_2^{(2)}$ and $si_3^{(2)}$ may be analysed differentially. If the equations for the respective direction are subtracted from each other the direct accelerations $s_1(t)$, $s_2(t)$ and $s_3(t)$ disappear and a system with two equations and two unknown parameters is left. Both characteristic parameters $e_0$ and $\gamma$ can then be determined. The difference between the accelerations in the respective direction can be expressed as:

$$\begin{cases} a_1^{(2)} - a_1^{(1)} = k_1 \sin(\omega t + \beta_1) \\ a_2^{(2)} - a_2^{(1)} = k_2 \sin(\omega t + \beta_2) \\ a_3^{(2)} - a_3^{(1)} = k_3 \sin(\omega t + \beta_3) \end{cases} \qquad (111, 112, 113)$$

where $k_1$, $k_2$, $k_3$, $\beta_1$, $\beta_2$ and $\beta_3$ are known functions of $e_0$ and $\gamma$.

In these exemplary embodiments the processing means 65 are configured to determine frequency spectrums $F_{d1}$, $F_{d2}$ and $F_{d3}$ for each of the differential signals $si_{d1}$, $si_{d2}$ and $si_{d3}$ A signal $si_{d1}$ is a difference between $si_1^{(1)}$ and $si_1^{(2)}$. A signal $si_{d2}$ is a difference between $si_2^{(1)}$ and $si_2^{(2)}$, and a signal $si_{d3}$ is a difference between the signals $si_3^{(1)}$ and $si_3^{(2)}$. The processing means 65 then fits the sinus term in the expression 111 to the differential signal $si_{d1}$ based on the frequency spectrum $F_{d1}$ for the signal. An amplitude $A_{md1}$ for a frequency component $F_{rd1}$ in the frequency spectrum $F_{d1}$ which corresponds the first harmonic is determined for $si_{d1}$ by the processing means 65. The processing means 65 also fits the sinus term in the expression 112 to the differential signal $si_{d2}$ based on the frequency spectrum $F_{d2}$ for the signal $si_{d2}$. An amplitude $A_{md2}$ for a frequency component $F_{rd2}$ in the frequency spectrum $F_{d2}$ which corresponds to the first harmonic is determined for $si_{d2}$ by the processing means 65. The processing means 65 also fits the sinus term in the expression 113 to the differential signal $si_{d3}$ based on the frequency spectrum $F_{d3}$ for the signal $si_{d3}$. An amplitude $A_{md3}$ for a frequency component $F_{rd3}$ in the frequency spectrum $F_{d3}$ which corresponds to the first harmonic is determined for $si_{d3}$ by the processing means 65. The processing means 65 then determines $e_0$ and $\gamma$ by finding a solution to the equation system:

$$\begin{cases} k_1(e_0,\gamma) = A_{md1} \\ k_2(e_0,\gamma) = A_{md2} \\ k_3(e_0,\gamma) = A_{md3} \end{cases}$$

The direct accelerations $s_1(t)$, $s_2(t)$ and $s_3(t)$ can be determined by the processing means 65 as:

$$\begin{cases} s_1(t) = a_1^{(1)}(t) - c_1 \sin(\omega t + \delta_1) \\ s_2(t) = a_2^{(1)}(t) - c_2 \sin(\omega t + \delta_2) \\ s_3(t) = a_3^{(1)}(t) - c_3 \sin(\omega t + \delta_3) \end{cases}$$

where $c_1$, $c_2$, $c_3$, $\delta_1$, $\delta_2$ and $\delta_3$ are known functions of $e_0$ and $\gamma$.

Other exemplary embodiments of the encoder 10 comprise two accelerometers that each measures accelerations in three directions respectively. In these exemplary embodiments the accelerations are measured along the base vectors in a cylindrical coordinate system, defined by:

$$\begin{cases} x = \rho\cos\phi \\ y = \rho\sin\phi \\ z = z \end{cases}$$

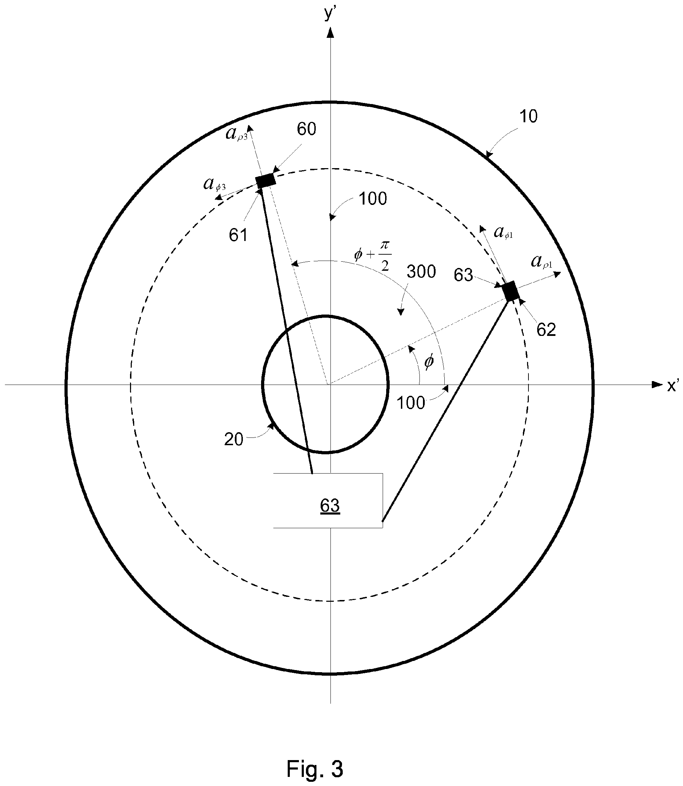

Fig. 3 illustrates these exemplary embodiments of the encoder 10. The accelerometer 61 measures accelerations $a_{\rho3}$, $a_{\phi3}$ and $a_{z3}$. The accelerometer 62 measures accelerations $a_{\rho1}$, $a_{\phi1}$ and $a_{z1}$. In these exemplary embodiments of the encoder 10 the accelerometer 61 generates the signals $si_{\rho3}$, $si_{\phi3}$ and $si_{z3}$ which are responses to accelerations $a_{\rho3}$, and $a_{z3}$ along the base vectors in the point 60 of the encoder 10. The accelerometer 62 generates the signals $si_{\rho1}$, $si_{\phi1}$ and $si_{z1}$ which are responses to accelerations $a_{\rho1}$, $a_{\phi1}$ and $a_{z1}$ along the base vectors in the point 63 of the encoder 10.

In the exemplary embodiments illustrated in fig. 3 the accelerometers 61 and 62 are placed at a same radius 300 and at a distance of a quarter of a turn. An advantage with these positions is that the amplitude of the differential signals in the xy-plane becomes independent of $\phi$. Another advantage compared to other positions is that all three differential signals can be used and that they all have the same order of magnitude in response to the wobbling axis and the eccentricity of the axis. Yet another advantage is that $\phi$ only influences the differential signal in the z-direction and that it is only the phase that is affected.

This means that the only customer specific parameters that are needed to calculate $e_0$ and g is the parameter h, the distance from the centre 90 of the rotary encoder to the point 50 where the torque arm 40 is attached to the encoder.

In these exemplary embodiments the processing means 65 may also analyse differential signals. In exemplary embodiments the processing means 65 analyses a differential signal $si_{d1}$ which is a difference between the signals $si_{\rho1}$ and $si_{\phi3}$ a differential signal $si_{d2}$ which is a difference between the signals $si_{\phi1}$ and $si_{\rho3}$, and a differential signal $si_{d3}$ which is a difference between the signals $si_{z1}$ and $si_{z3}$. In these exemplary embodiments the accelerations for the differential signals can be expressed as:

$$\begin{cases} a_{\rho1} + a_{\phi3} = -\dfrac{e_0\omega^2\rho}{h}\sin\omega t + \delta(t) \\[2mm] a_{\phi1} - a_{\rho3} = -\dfrac{e_0\omega^2\rho}{h}\sin\omega t + \delta(t) \\[2mm] a_{z1} - a_{z3} = \sqrt{2}\gamma\omega^2\rho\sin(\omega t + \phi + \dfrac{\pi}{4}) \end{cases}$$

$$(114, 115, 116)$$

In these exemplary embodiments the processing means 65 are also configured to determine frequency spectrums $F_{d1}$, $F_{d2}$ and $F_{d3}$ for each of the differential signals $si_{d1}$, $si_{d2}$ and $si_{d3}$. The processing means 65 then fits the sinus term in the expression 114 to the differential signal $si_{d1}$ based on the frequency spectrum $F_{d1}$ for the signal. An amplitude $A_{md1}$ for a frequency components $F_{rd1}$ in the frequency spectrums $F_{d1}$ which corresponds the first harmonic is determined for $si_{d1}$ by the processing means 65. The processing means 65 also fits the sinus term in the expression 115 to the differential signal $si_{d2}$ based on the frequency spectrum $F_{d2}$ for the signal $si_{d2}$. An amplitude $A_{md2}$ for a frequency component $F_{rd2}$ in the frequency spectrum $F_{d2}$ which corresponds to the first harmonic is determined for $si_{d2}$ by the processing means 65. The processing means 65 also fits the sinus term in the expression 116 to the differential signal $si_{d3}$ based on the frequency spectrum $F_{d3}$ for the signal $si_{d3}$. An amplitude $A_{md3}$ for a frequency component $F_{rd3}$ in the frequency spectrum $F_{d3}$ which corresponds to the first harmonic is determined for $si_{d3}$ by the processing means 65.

The processing means 65 then determines $e_0$ and g by solving the equation system

$$\begin{cases} Am_1 = e_0 k_1 \\ Am_2 = e_0 k_2 \\ Am_3 = \gamma k_3 \end{cases} \qquad \text{where } k_1 = k_2 = \dfrac{\omega^2\rho}{h}, \; k_3 = \sqrt{2}\omega^2\rho$$

In these exemplary embodiments the method of least squares yields: $e_0 = \dfrac{Am_1 + Am_2}{2k_1}$ $\gamma = \dfrac{Am_3}{k_3}$

The direct accelerations $s_{\rho 1}(t)$, $s_{\phi 1}(t)$ and $s_z(t)$ can be determined by the processing means 65 by using all known parameters in equation 117 and compare with the signals from the accelerometers. The accelerations generated by the eccentric and wobbling axis can then be subtracted and the processing means can perform further analysis of the direct accelerations.

$$\begin{cases} s_{\rho 1}(t) = si_{\rho 1} + (e_0 - \gamma g)\omega^2 \cos(\omega t - \phi_1) \\[2mm] s_{\phi 1}(t) = si_{\phi 1} + \dfrac{e_0 \omega^2 \rho}{h} \sin \omega t - (e_0 - \gamma g)\omega^2 \sin(\omega t - \phi_1) \\[2mm] s_z(t) = si_{z1} - \gamma \omega^2 \rho \cos(\omega t + \phi_1) \end{cases}$$

$$(117)$$

where $s_{\rho 1} = -s_{\phi 2}$ and $s_{\phi 1} = s_{\rho 2}$

The direct accelerations can be written in the generalized form:

$$\begin{cases} s_{\rho 1}(t) = si_{\rho 1} - c_1 \sin(\omega t + \beta_1) \\[2mm] s_{\phi 1}(t) = si_{\phi 1} - c_2 \sin(\omega t + \beta_2) \\[2mm] s_z(t) = si_{z1} - c_3 \sin(\omega t + \beta_3) \end{cases}$$

where

$$c_1 = -(e_0 - \gamma g)\omega^2$$

$$c_2 = -\sqrt{\left(\frac{e_0 \omega^2 \rho}{h}\right)^2 + \left((e_0 - \gamma g)\omega^2\right) + 2\frac{e_0 \omega^2 \rho}{h}(e_0 - \gamma g)\omega^2 \cos \phi_1}$$

$$c_3 = \gamma \omega^2 \rho$$

$$\beta_1 = \frac{\pi}{2} - \phi_1$$

$$\beta_2 = \arctan\left(\frac{-(e_0 - \gamma g)\sin \phi_1}{\frac{e_0 \rho}{h} + (e_0 - \gamma g)\cos \phi_1}\right) + \begin{cases} 0 & om \quad \frac{e_0 \rho}{h} + (e_0 - \gamma g)\cos \phi_1 \geq 0 \\[3mm] \pi & om \quad \frac{e_0 \rho}{h} + (e_0 - \gamma g)\cos \phi_1 < 0 \end{cases}$$

$$\beta_3 = \frac{\pi}{2} + \phi_1$$

In yet another exemplary embodiment of the encoder 10 one or several accelerometers can be used to detect a play in the torque arm 40 (fig. 1). Since a play in the torque arm 40 results in a turning motion without any radial component it is appropriate to use an accelerometer that measures acceleration along the tangential direction in a cylindrical coordinate system. Fig. 3 illustrates an exemplary embodiment of the encoder 10 that can be used to detect a play in the torque arm 40 (fig. 1).

The accelerometer 62 measures accelerations $a_{\rho 1}$, $a_{\phi 1}$ and $a_{z1}$. In an exemplary embodiment of the encoder 10, which will be described below, it is however only necessary to use an accelerometer that measures the acceleration $a_{\phi 1}$. In this exemplary embodiment of the encoder 10 the accelerometer 62 generates the signal $si_{\phi 1}$ which is the response to the acceleration $a_{\phi 1}$ along the tangential vector in the point 63 of the encoder 10.

In this exemplary embodiment the accelerations for the signal $si_{\phi 1}$ can be expressed according to equation 118 below. The play in the torque arm is added to the equation 118 by adding an extra acceleration term (d(t)), d appears as acceleration peaks if there is a play in the torque arm 40.

$$\left\{ a_\phi = -\frac{e_0 \omega^2 \rho}{h} \sin \omega t - (e_0 - \gamma g)\omega^2 \sin(\omega t - \phi) + s_\phi(\phi, t) + \delta(t) \right.$$

118

In this exemplary embodiment the processing means 65 is configured to determine a frequency spectrum $F_{sif1}$ for the signal $si_{\phi 1}$, in which the amplitude of the harmonic corresponding to one cycle per revolution is called $A_m$. In this exemplary embodiment the processing means 65 is also configured to determine the peak to peak value of the signal $si_{\phi 1}$ (i.e. max-min). In an exemplary embodiment of the encoder 10 the processing means 65 determines a ratio between half of the peak to peak value for $si_{\phi 1}$ and the one periodic amplitude $A_m$ for the signal $si_{\phi 1}$ If this ratio exceeds a certain value the processing means 65 determines that there is a play in the torque arm 40. If the rotation is slow or if the axis 20 is not wobbling enough the amplitude $A_m$ becomes small but noise and distortion may be large. The ratio can then become large even though there is no play in the torque arm 40. In another embodiment of the encoder 10 the processing means 65 may therefore use further criterions to determine that there is a play in the torque arm 40. The processing means 65 may for instance determine that there is a play in the torque arm 40 if the described ratio is larger than a certain value if at the same time as the peak to peak value of $si_{\phi 1}$ is larger than another predetermined value.

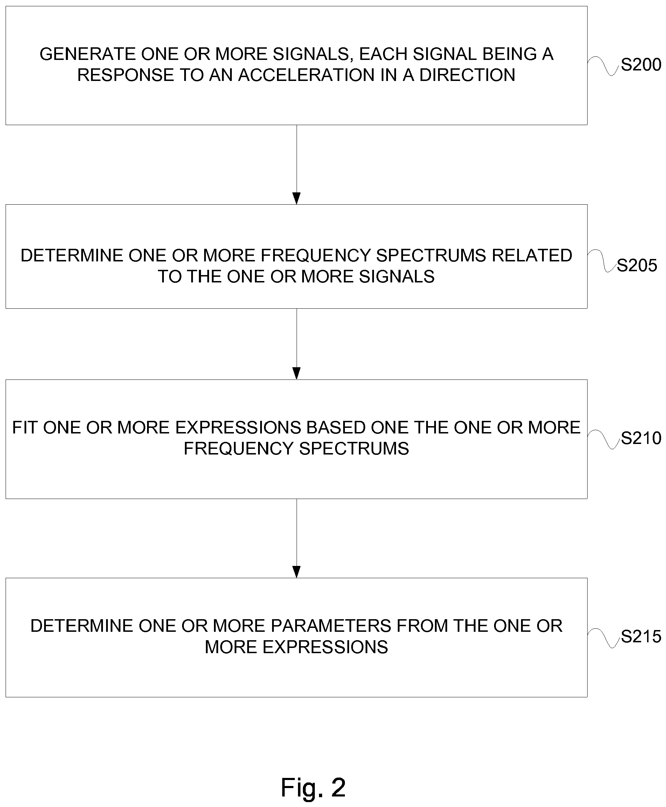

Referring to figure 2 there is illustrated a flowchart of a method describing the steps for determining one or more parameters, in accordance with previously described embodiments of the present invention. As shown in figure 2, the method comprises:

- generating (S200) one or more signals, each signal being a response to an acceleration in a direction in a point of said encoder;
- determining (S205) one or more frequency spectrums related to the one or more signals;
- fitting (S210) one or more expressions related to the one or more signals based on the one or more frequency spectrums, where each expression describes an acceleration related to the one or more direction and the one or more points of the encoder; and
- determining (S215) one or more parameters from the one or more expressions, where each parameter is related to a type of vibration for the encoder.

Means mentioned in the present description can be software means, hardware means or a combination of both. The described subject matter is of course not limited to the above described and in the drawings shown embodiments, but can be modified within the scope of the enclosed claims.

**Claims**

1. A method for determining one or more parameters, each parameters being related to a type of vibration for an encoder (10) mounted on an axis (20) and arranged to detect rotary movement of said axis (20), and wherein an element 40 fixed at said encoder (10) prevents said encoder (10) from rotating with said axis (20); the method comprising the steps of:

   generating (S200) one or more signals, each signal being a response to an acceleration in a direction in a point of said encoder;
   determining (S205) one or more frequency spectrums related to said one or more signals;
   establishing one or more equations and fitting (S210) a trigonometric function of said equations related to said one or more signals based on said one or more frequency spectrums, where each equation describes an acceleration related to said one or more direction and said one or more points of the encoder; and
   determining (S215) one or more parameters from said one or more equations, where each parameter is related to a type of vibration for said encoder.

2. The method according to claim 1, wherein the step of determining (S205) one or more frequency spectrums comprising determining the frequency spectrum for each of said one or more signals, and wherein the step of fitting (S210) comprising fitting an equation to each of said one or more signals based on each of one or more said frequency spectra, where each equation describes said acceleration in said direction in said point of the encoder.

3. A method according to claim 2, wherein said method, after said step of determining, comprises the further step of:

subtracting each of said type of vibration using said respective one or more parameters from each of said respective signal, thereby obtaining a direct acceleration in each of said respective direction for said encoder.

4. The method according to claim 1, wherein in the step of determining (S205) one or more frequency spectrums, each of said one or more frequency spectrum is determined for each of said one or more differential signal, where each of said one or more differential signal is a difference between a first signal being a response to a first acceleration in a first direction in a first point of said encoder and a second signal being a response to a second acceleration in said first direction in a second point of said encoder; and wherein in the step of fitting (S210), an equation is fitted to each of said differential signals, where each of said one or more equation describes a difference between said first acceleration in said first direction in said first point of said encoder and said second acceleration in said first direction in said second point of said encoder.

5. A method according to claim 4, wherein said method, after said step of determining, comprises the further step of:

   subtracting each of said type of vibration using said respective one or more parameters from each of said respective signal, thereby obtaining a direct acceleration in each of said respective direction for said encoder.

6. An encoder (10) for determining one or more parameters, each parameters being related to a type of vibration for an encoder (10) mounted on an axis (20) and arranged to detect rotary movement of said axis (20), and wherein an element (40) fixed at said encoder (10) prevents said encoder (10) from rotating with said axis (20); the encoder comprises: at least one accelerometer (61, 62) for generating one or more signals, each signal being a response to an acceleration in a direction in a point of said encoder;
   processing means (65) for determining one or more frequency spectrums related to said one or more signals; said processing means (65) being further configured to fitting a trigonometric function of one or more equations related to said one or more signals based on said one or more frequency spectrums, where each equation describes an acceleration related to said one or more direction and said one or more points of the encoder (10); said processing means (65) being yet further configured for determining one or more parameters from said one or more equations, where each parameter is related to a type of vibration for said encoder.

7. An encoder (10) according to claim 6, wherein said processing means (65) is further configured for determining the frequency spectrum for each of said one or more signals and for fitting an equation to each of said one or more signals based on each of one or more said spectra, where each equation describes said acceleration in said direction in said point of the encoder.

8. An encoder (10) according to claim 7, wherein said processing means (65) is further configured for:

   subtracting each of said type of vibration using said respective one or more parameters from each of said respective signal, thereby obtaining a direct acceleration in each of said respective direction for said encoder.

9. An encoder (10) according to claim 7, wherein said processing means (65) is further configured for determining said one or more spectrums for each of said one or more differential signal where each of said one or more differential signal is a difference between a first signal being a response to a first acceleration in a first direction in a first point of said encoder (10) and a second signal being a response to a second acceleration in said first direction in a second point of said encoder; and where said processing means (65) is yet further configures for fitting an equation to each of said one or more differential signals, where each equation describes a difference between said first acceleration in said first direction in said first point of said encoder and said second acceleration in said first direction in said second point of said encoder.

10. An encoder (10) according to claim 9, wherein said processing means (65) is further configured for:

    subtracting each of said type of vibration using said respective one or more parameters from each of said respective signal, thereby obtaining a direct acceleration in each of said respective direction for said encoder.

**Patentansprüche**

1. Verfahren zur Ermittlung eines oder mehrerer Parameter, wobei jeder Parameter mit einer Schwingungsart für einen Lagegeber (10) in Beziehung steht, der an einer Achse (20) montiert und ausgebildet ist, eine Drehbewegung der Achse (20) zu erfassen, und wobei ein Element (40), das an dem Lagegeber (10) befestigt ist, verhindert, dass der Lagegeber (10) sich mit der Achse (20) dreht; wobei das Verfahren die Schritte umfasst:

Erzeugen (S200) eines oder mehrerer Signale, wobei jedes Signal eine Reaktion auf eine Beschleunigung in eine Richtung an einem Punkt des Lagegebers (10) ist;

Ermitteln (S205) eines oder mehrerer Frequenzspektren, die mit dem einen oder den mehreren Signalen in Beziehung stehen;

Erstellen einer oder mehrerer Gleichungen und Anpassen (S210) einer trigonometrischen Funktion der Gleichungen, die mit dem einen oder den mehreren Signalen in Beziehung stehen, auf der Grundlage des einen oder der mehreren Frequenzspektren, wobei jede Gleichung eine Beschleunigung beschreibt, die mit der einen oder den mehreren Richtungen und dem einen oder den mehreren Punkten des Lagegebers in Beziehung steht; und

Ermitteln (S215) eines oder mehrerer Parameter aus der einen oder den mehreren Gleichungen, wobei jeder Parameter einer Schwingungsart für den Lagegeber zugeordnet ist.

2. Verfahren nach Anspruch 1, wobei der Schritt des Ermittelns (S205) eines oder mehrerer Frequenzspektren umfasst: Ermitteln des Frequenzspektrum für jedes des einen oder der mehreren Signale, und wobei der Schritt des Anpassens (S210) umfasst: Anpassen einer Gleichung an jedes des einen oder der mehreren Signale auf der Grundlage jedes des einen oder der mehreren Frequenzspektren, wobei jede Gleichung die Beschleunigung in der Richtung an dem Punkt des Lagegebers beschreibt.

3. Verfahren nach Anspruch 2, wobei das Verfahren nach dem Schritt des Ermitteins ferner den Schritt umfasst:

Subtrahieren jeweils der Schwingungsart unter Anwendung des entsprechenden einen oder der entsprechenden mehreren Parameter jeweils von dem entsprechenden Signal, um damit eine direkte Beschleunigung in jeder der entsprechenden Richtungen für den Lagegeber zu erhalten.

4. Verfahren nach Anspruch 1, wobei beim Schritt des Ermittelns (S205) eines oder mehrerer Frequenzspektren jedes des einen oder der mehreren Frequenzspektren für jedes des einen oder der Differenzsignale ermittelt wird, wobei jedes des einen oder der mehreren Differenzsignale eine Differenz zwischen einem ersten Signal ist, das eine Reaktion auf eine Beschleunigung in einer ersten Richtung an einem ersten Punkt des Lagegebers ist, und einem zweiten Signal, das eine Reaktion auf eine zweite Beschleunigung in der ersten Richtung an einem zweiten Punkt des Lagegebers ist; und wobei in dem Schritt des Anpassens (S210) eine Gleichung an jedes der Differenzsignale angepasst wird, wobei jede der einen oder mehreren Gleichungen eine Differenz zwischen der ersten Beschleunigung in der ersten Richtung an dem ersten Punkt des Lagegebers und der zweiten Beschleunigung in der ersten Richtung an dem zweiten Punkt des Lagegebers beschreibt.

5. Verfahren nach Anspruch 4, wobei das Verfahren nach dem Schritt des Ermittelns den weiteren Schritt umfasst:

Subtrahieren jeweils der Schwingungsart unter Anwendung des jeweiligen einen oder der mehreren Parameter von jedem des jeweiligen Signals, wodurch eine direkte Beschleunigung in jeder der entsprechenden Richtungen für den Lagegeber ermittelt wird.

6. Lagegeber (10) zur Ermittlung eines oder mehrerer Parameter, wobei jeder Parameter mit einer Schwingungsart für einen Lagegeber (10) in Beziehung steht, der an einer Achse (20) montiert und angeordnet ist, eine Drehbewegung der Achse (20) zu erfassen, und wobei ein Element (40), das an dem Lagegeber (10) befestigt ist, verhindert, dass der Lagegeber (10) sich mit der Achse (20) dreht; wobei der Lagegeber umfasst: mindestens einen Beschleunigungsmesser (61, 62) zur Erzeugung eines oder mehrerer Signale, wobei jedes Signal eine Reaktion auf eine Beschleunigung in einer Richtung an einem Punkt des Lagegebers ist;

eine Verarbeitungseinrichtung (65) zur Ermittlung eines oder mehrerer Frequenzspektren, die mit dem einen oder den mehreren Signalen in Beziehung stehen; wobei die Verarbeitungseinrichtung (65) ferner ausgebildet ist, eine trigonometrische Funktion einer oder mehrerer Gleichungen, die mit dem einen oder den mehreren Signalen in Beziehung stehen, auf der Grundlage des einen oder der mehreren Frequenzspektren anzupassen, wobei jede Gleichung eine Beschleunigung beschreibt, die mit der einen oder den mehreren Richtungen und dem einen oder den mehreren Punkten des Lagegebers (10) in Beziehung steht; wobei die Verarbeitungseinrichtung (65) ferner ausgebildet ist, einen oder mehrere Parameter aus der einen oder den mehreren Gleichungen zu ermitteln, wobei jeder Parameter einer Schwingungsart für den Lagegeber zugeordnet ist.

**7.** Lagegeber (10) nach Anspruch 6, wobei die Verarbeitungseinrichtung (65) ferner ausgebildet ist, das Frequenzspektrum für jedes des einen oder der mehreren Signale zu ermitteln und eine Gleichung an jedes des einen oder der mehreren Signale auf der Grundlage jedes des einen oder der mehreren Spektren anzupassen, wobei jede Gleichung die Beschleunigung in der Richtung an dem Punkt des Lagegebers beschreibt.

**8.** Lagegeber (10) nach Anspruch 7, wobei die Verarbeitungseinrichtung (65) ferner ausgebildet ist, um:

jede der Schwingungsarten unter Anwendung des jeweiligen einen oder mehreren Parameters von jedem des jeweiligen Signals zu subtrahieren, wodurch eine direkte Beschleunigung in jeder der jeweiligen Richtungen für den Lagegeber erhalten wird.

**9.** Lagegeber (10) nach Anspruch 7, wobei die Verarbeitungseinrichtung (65) ferner ausgebildet ist, das eine oder die mehreren Spektren für jedes des einen oder der mehreren Differenzsignale zu ermitteln, wobei jedes des einen oder der mehreren Differenzsignale eine Differenz ist zwischen einem ersten Signal, das eine Reaktion auf eine erste Beschleunigung in einer ersten Richtung an einem ersten Punkt des Lagegebers (10) ist, und einem zweiten Signal, das eine Reaktion auf eine zweite Beschleunigung in der ersten Richtung an einem zweiten Punkt des Lagegebers ist; und wobei die Verarbeitungseinrichtung (65) ferner ausgebildet ist, eine Gleichung an jedes des einen oder der mehreren Differenzsignale anzupassen, wobei jede Gleichung eine Differenz zwischen der ersten Beschleunigung in der ersten Richtung an dem ersten Punkt des Lagegebers und der zweiten Beschleunigung in der ersten Richtung an dem zweiten Punkt des Lagegebers beschreibt.

**10.** Lagegeber (10) nach Anspruch 9, wobei die Verarbeitungseinrichtung (65) ferner ausgebildet ist, um:

jede Schwingungsart unter Anwendung des jeweiligen einen oder der mehreren Parameter von jedem des jeweiligen Signals zu subtrahieren, so dass eine direkte Beschleunigung in jeder der jeweiligen Richtungen für den Lagegeber erhalten wird.

**Revendications**

**1.** Procédé de détermination d'un ou plusieurs paramètres, chaque paramètre étant lié à un type de vibration pour un codeur (10) monté sur un axe (20) et agencé pour détecter un mouvement rotatif dudit axe (20), et dans lequel un élément (40) fixé sur ledit codeur (10) empêche ledit codeur (10) de tourner avec ledit axe (20) ; le procédé comprenant les étapes de :

génération (S200) d'un ou plusieurs signaux, chaque signal étant une réponse à une accélération dans une direction dans un point dudit codeur ;
détermination (S205) d'un ou plusieurs spectres de fréquences liés auxdits un ou plusieurs signaux ;
établissement d'une ou plusieurs équations et adaptation (S210) d'une fonction trigonométrique desdites équations liées auxdits un ou plusieurs signaux sur la base desdits un ou plusieurs spectres de fréquence, où chaque équation décrit une accélération liée à ladite une ou plusieurs directions et audit un ou plusieurs points du codeur ; et
détermination (S215) d'un ou plusieurs paramètres desdites une ou plusieurs équations, où chaque paramètre est lié à un type de vibration pour ledit codeur.

**2.** Procédé selon la revendication 1, dans lequel l'étape de détermination (S205) d'un ou plusieurs spectres de fréquence comprenant la détermination du spectre de fréquence pour chacun desdits uns ou plusieurs signaux, et dans lequel l'étape d'adaptation (S210) comprenant l'adaptation d'une équation à chacun desdits un ou plusieurs signaux sur la base de chacun des un ou plusieurs spectres de fréquence, où chaque équation décrit ladite accélération dans ladite direction dans ledit point du codeur.

**3.** Procédé selon la revendication 2, dans lequel ledit procédé, après ladite étape de détermination, comprend l'étape supplémentaire de :

soustraction de chacun dudit type de vibration en utilisant lesdits un ou plusieurs paramètres respectifs à chacun dudit signal respectif, obtenant ainsi une accélération directe dans chacune de ladite direction respective pour ledit codeur.

**4.** Procédé selon la revendication 1, dans lequel dans l'étape de détermination (S205) d'un ou plusieurs spectres de fréquence, chacun desdits un ou plusieurs spectres de fréquence est déterminé pour chacun desdits un ou plusieurs signaux différentiels, où chacun desdits un ou plusieurs signaux différentiels est une différence entre un premier signal qui est une réponse à une première accélération dans une première direction dans un premier point dudit codeur et un second signal qui est une réponse à une seconde accélération dans ladite première direction dans un second point dudit codeur ; et dans lequel dans l'étape d'adaptation (S210), une équation est adaptée à chacun desdits signaux différentiels, où chacune desdites une ou plusieurs équations décrit une différence entre ladite première accélération dans ladite première direction dans ledit premier point dudit codeur et ladite seconde accélération dans ladite première direction dans ledit second point dudit codeur.

**5.** Procédé selon la revendication 4, dans lequel ledit procédé, après ladite étape de détermination, comprend l'étape suivante de :

soustraction de chacun dudit type de vibration en utilisant lesdits un ou plusieurs paramètres respectifs à chacun dudit signal respectif, obtenant ainsi une accélération directe dans chacune de ladite direction respective pour ledit codeur.

**6.** Codeur (10) pour déterminer un ou plusieurs paramètres, chaque paramètre étant lié à un type de vibration pour un codeur (10) monté sur un axe (20) et agencé pour détecter un mouvement rotatif dudit axe (20), et dans lequel un élément (40) fixé sur ledit codeur (10) empêche ledit codeur (10) de tourner avec ledit axe (20) ; le codeur comprend : au moins un accéléromètre (61, 62) pour générer un ou plusieurs signaux, chaque signal étant une réponse à une accélération dans une direction dans un point dudit codeur ;
un moyen de traitement (65) pour déterminer un ou plusieurs spectres de fréquence liés auxdits un ou plusieurs signaux ; ledit moyen de traitement (65) étant en outre configuré pour adapter une fonction trigonométrique d'une ou plusieurs équations liées auxdits un ou plusieurs signaux sur la base desdits un ou plusieurs spectres de fréquence, où chaque équation décrit une accélération liée auxdites une ou plusieurs directions et auxdits un ou plusieurs points du codeur (10) ; ledit moyen de traitement (65) étant encore en outre configuré pour déterminer un ou plusieurs paramètres desdites une ou plusieurs équations où chaque paramètre est lié à un type de vibration pour ledit codeur.

**7.** Codeur (10) selon la revendication 6, dans lequel ledit moyen de traitement (65) est en outre configuré pour déterminer le spectre de fréquence pour chacun desdits uns ou plusieurs signaux et pour adapter une équation à chacun desdits un ou plusieurs signaux sur la base de chacun des un ou plusieurs dits spectres, où chaque équation décrit ladite accélération dans ladite direction dans ledit point du codeur.

**8.** Codeur (10) selon la revendication 7, dans lequel ledit moyen de traitement (65) est en outre configuré pour :

soustraire chacun dudit type de vibration en utilisant lesdits un ou plusieurs paramètres respectifs à chacun dudit signal respectif, obtenant ainsi une accélération directe dans chacune de ladite direction respective pour ledit codeur.

**9.** Codeur (10) selon la revendication 7, dans lequel ledit moyen de traitement (65) est en outre configuré pour déterminer lesdits un ou plusieurs spectres pour chacun desdits un ou plusieurs signaux différentiels où chacun desdits un ou plusieurs signaux différentiels est une différence entre un premier signal qui est une réponse à une première accélération dans une première direction dans un premier point dudit codeur (10) et un second signal qui est une réponse à une seconde accélération dans ladite première direction dans un second point dudit codeur ; et où ledit moyen de traitement (65) est encore en outre configuré pour adapter une équation à chacun desdits un ou plusieurs signaux différentiels, où chaque équation décrit une différence entre ladite première accélération dans ladite première direction dans ledit premier point dudit codeur et ladite seconde accélération dans ladite première direction dans ledit second point dudit codeur.

**10.** Codeur (10) selon la revendication 9, dans lequel ledit moyen de traitement (65) est en outre configuré pour :

soustraire chacun dudit type de vibration en utilisant lesdits un ou plusieurs paramètres respectifs à chacun dudit signal respectif, obtenant ainsi une accélération directe dans chacune de ladite direction respective pour ledit codeur.

Fig. 1

GENERATE ONE OR MORE SIGNALS, EACH SIGNAL BEING A RESPONSE TO AN ACCELERATION IN A DIRECTION          S200

DETERMINE ONE OR MORE FREQUENCY SPECTRUMS RELATED TO THE ONE OR MORE SIGNALS          S205

FIT ONE OR MORE EXPRESSIONS BASED ONE THE ONE OR MORE FREQUENCY SPECTRUMS          S210

DETERMINE ONE OR MORE PARAMETERS FROM THE ONE OR MORE EXPRESSIONS          S215

Fig. 2

Fig. 3

## Fig. 5

## Fig. 6

Excentric axis

Fig. 7

Excentric axis

Fig. 8

Excentric axis

Fig. 9

Excentric axis

Fig. 10

Fig. 11

Fig. 12

Fig. 13

Fig. 14

Fig. 15

Fig. 16

Fig. 17

Fig. 18

Fig. 19

Wobbling axis

Wobbling axis

Fig. 20

Fig. 21

## Wobbling axis

## Wobbling axis

## Fig. 22

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1480344 A
- US 2007118333 A
- US 6615156 B